(19) Europäisches Patentamt
European Patent Office
Office européen des brevets

(11) **EP 4 007 265 A1**

(12) **EUROPEAN PATENT APPLICATION**
published in accordance with Art. 153(4) EPC

(43) Date of publication:
**01.06.2022 Bulletin 2022/22**

(21) Application number: **20847784.4**

(22) Date of filing: **28.07.2020**

(51) International Patent Classification (IPC):
*H04N 5/232* (2006.01)     *G02B 7/28* (2021.01)
*G02B 7/34* (2021.01)      *G03B 15/00* (2021.01)
*G03B 17/18* (2021.01)     *G03B 35/00* (2021.01)
*G06T 7/593* (2017.01)

(52) Cooperative Patent Classification (CPC):
**G02B 7/28; G02B 7/34; G03B 15/00; G03B 17/18;
G03B 35/00; G06T 7/593; H04N 5/232**

(86) International application number:
**PCT/JP2020/028776**

(87) International publication number:
**WO 2021/020358 (04.02.2021 Gazette 2021/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2019   JP 2019140818
20.07.2020   JP 2020124031**

(71) Applicant: **CANON KABUSHIKI KAISHA
OHTA-KU
Tokyo 146-8501 (JP)**

(72) Inventors:
• **SASAKI Takashi
Tokyo 146-8501 (JP)**
• **MORI Shigeki
Tokyo 146-8501 (JP)**

(74) Representative: **Canon Europe Limited
European Intellectual Property Group
4 Roundwood Avenue
Stockley Park
Uxbridge UB11 1AF (GB)**

(54) **IMAGE PROCESSING DEVICE, IMAGE PROCESSING METHOD, PROGRAM, AND STORAGE MEDIUM**

(57)     An image processing apparatus according to the present invention includes: input means for inputting a distance information distribution calculated from an image captured by using an optical system that forms a field image on an imaging element of imaging means; estimation means for estimating a depth direction in the image from an imaging condition of the imaging means; and decision means for deciding, from a relationship between the distance information distribution and the estimated depth direction, an evaluation value indicating a deviation degree of the optical system and the imaging element from design positions.

FIG. 5B

START

RECEIVE DATA — S504

ESTIMATE DEPTH DIRECTION — S505

GENERATE EVALUATION VALUE OF DEVIATION DEGREE FROM DESIGN VALUES — S506

EVALUATION VALUE > Th — S507 — No

Yes — S508

TRANSMIT INFORMATION OF CAMERA IN WHICH DEVIATION IS DETECTED

END

## Description

Technical Field

The present invention relates to an image processing apparatus, and particularly to information related to long-term changes in an optical system and an imaging element and information on an orientation of the image processing apparatus.

Background Art

A technique has been conventionally known for diagnosing a change in a relative position relationship between a pair of stereo cameras due to a long-term change or the like by referring to distance information acquired from the stereo cameras and for supporting calibration of the stereo cameras. For example, PTL 1 discloses the following method. A subject is imaged in a predetermined position relationship on a substantially flat surface, on which a texture for diagnosis is provided, by stereo cameras mounted on a head of a robot, and flatness is obtained through calculation of distance information from obtained parallax images. Then, the obtained flatness and a predetermined reference amount are compared with each other to determine whether calibration is needed.

Citation List

Patent Literature

PTL 1: Japanese Patent Laid-Open No. 2004-306249

Summary of Invention

Solution to Problem

Also in a digital camera that is not mounted on a robot and is used by a typical user, a lens that is an optical system or an imaging element using CMOS may change from an attachment position at the manufacture (design position) due to a long-term change or the like. When the lens or the imaging element is slanted, a relationship between an actual distance and the depth of field is deviated, and an image not intended by a user is acquired. Thus, also for a digital camera used by a typical user, a method for determining whether calibration of a lens or an imaging element is needed and solutions therefor are desired.

In addition, in imaging by using a digital camera, when the digital camera faces and images a subject to be imaged, even with calibration of a lens or an imaging element, a slanted imaging apparatus or an inappropriate imaging distance prevents a favorable captured image from being obtained. In particular, a slant or a distance error in the depth direction leads to blurring of (a target subject in) a captured image.

Thus, an object of the present invention is to provide an image processing apparatus that enables notification of at least one piece of information on a slant of a lens or an imaging element or information on a position or orientation of an imaging apparatus on the basis of a distance information distribution corresponding to a distance to a subject.

In order to solve the above problems, an image processing apparatus according to the present invention includes: input means for inputting a distance information distribution calculated from an image captured by using an optical system that forms a field image on an imaging element of imaging means; estimation means for estimating a depth direction in the image from an imaging condition of the imaging means; and decision means for deciding, from a relationship between the distance information distribution and the estimated depth direction, an evaluation value indicating a deviation degree of the optical system and the imaging element from design positions.

In addition, an image processing apparatus according to the present invention includes: input means for inputting a distance information distribution calculated from an image captured by using an optical system that forms a field image on an imaging element of imaging means; estimation means for estimating a depth direction in the image from an imaging condition of the imaging means; and decision means for deciding, from a relationship between the distance information distribution and the estimated depth direction, an evaluation value indicating a deviation degree in a depth direction of a subject in the image.

In addition, an image processing apparatus according to the present invention includes: imaging condition acquisition means for acquiring an imaging condition regarding an image captured by imaging means, including at least an F-number and a transform coefficient that transforms an image shift amount into a defocus amount; distance information acquisition means for acquiring a distance information distribution that is a distribution of distance information corresponding to each region of the image captured by the imaging means; and image processing means for normalizing the distance information distribution on the basis of the F-number and the transform coefficient.

In addition, an image processing method according to the present invention includes: an input step of inputting a distance information distribution calculated from an image captured by using an optical system that forms a field image on an imaging element of imaging means; an estimation step of estimating a depth direction in the image from an imaging condition of the imaging means; and a decision step of deciding, from a relationship between the distance information distribution and the estimated depth direction, an evaluation value indicating a deviation degree of the optical system and the imaging element from design positions.

In addition, an image processing method according to the present invention includes: an input step of inputting a distance information distribution calculated from an image captured by using an optical system that forms a field image on an imaging element of imaging means; an estimation step of estimating a depth direction in the image from an imaging condition of the imaging means; and a decision step of deciding, from a relationship between the distance information distribution and the estimated depth direction, an evaluation value indicating a deviation degree in a depth direction of a subject in the image.

In addition, an image processing method according to the present invention includes: an imaging condition acquisition step of acquiring an imaging condition regarding an image captured by imaging means, including at least an F-number and a transform coefficient that transforms an image shift amount into a defocus amount; a distance information acquisition step of acquiring a distance information distribution that is a distribution of distance information corresponding to each region of the image captured by the imaging means; and an image processing step of normalizing the distance information distribution on the basis of the F-number and the transform coefficient.

According to the present invention, it is possible to provide an image processing apparatus that enables checking of the deviation degree of the optical system and the imaging element from design positions.

Brief Description of Drawings

[Fig. 1] Fig. 1 is a block diagram illustrating a functional configuration example of an image processing apparatus according to embodiments of the present invention.
[Fig. 2] Fig. 2 is a block diagram illustrating a functional configuration example of a digital camera according to the embodiments of the present invention.
[Fig. 3] Fig. 3 is a block diagram illustrating a functional configuration example of a computer according to the embodiments of the present invention.
[Fig. 4A] Fig. 4A illustrates a configuration example of an imaging unit according to the embodiments of the present invention.
[Fig. 4B] Fig. 4B illustrates a configuration example of the imaging unit according to the embodiments of the present invention.
[Fig. 5A] Fig. 5A is a flowchart illustrating operations of the image processing apparatus according to the embodiments of the present invention.
[Fig. 5B] Fig. 5B is a flowchart illustrating operations of the image processing apparatus according to the embodiments of the present invention.
[Fig. 5C] Fig. 5C is a flowchart illustrating operations of the image processing apparatus according to the embodiments of the present invention.

[Fig. 6] Fig. 6 illustrates an image for recording a still image according to the embodiments of the present invention.
[Fig. 7] Fig. 7 illustrates a defocus map according to the embodiments of the present invention.
[Fig. 8] Fig. 8 is a block diagram illustrating a functional configuration example of an image processing unit 306 according to the embodiments of the present invention.
[Fig. 9] Fig. 9 illustrates a plane on which the defocus amount becomes zero according to the embodiments of the present invention.
[Fig. 10] Fig. 10 illustrates a defocus map when an in-focus plane is normal according to the embodiments of the present invention.
[Fig. 11A] Fig. 11A illustrates a phenomenon that occurs when an optical system and an imaging element shift from design positions according to the embodiments of the present invention.
[Fig. 11B] Fig. 11B illustrates a phenomenon that occurs when the optical system and the imaging element shift from the design positions according to the embodiments of the present invention.
[Fig. 12] Fig. 12 illustrates a defocus map when the in-focus plane is slanted according to the embodiments of the present invention.
[Fig. 13] Fig. 13 illustrates an evaluation value indicating a deviation degree according to the embodiments of the present invention.
[Fig. 14] Fig. 14 illustrates a notification to a user according to the embodiments of the present invention.
[Fig. 15] Fig. 15 illustrates estimation results of a vanishing point and a depth direction according to the embodiments of the present invention.
[Fig. 16] Fig. 16 illustrates a histogram of a defocus map according to the embodiments of the present invention.
[Fig. 17A] Fig. 17A illustrates an image for recording a still image, a defocus map, and a histogram of the defocus map in a portrait scene according to the embodiments of the present invention.
[Fig. 17B] Fig. 17B illustrates an image for recording a still image, a defocus map, and a histogram of the defocus map in a portrait scene according to the embodiments of the present invention.
[Fig. 17C] Fig. 17C illustrates an image for recording a still image, a defocus map, and a histogram of the defocus map in a portrait scene according to the embodiments of the present invention.
[Fig. 18] Fig. 18 illustrates optical vignetting characteristics of the optical system according to a first embodiment of the present invention.
[Fig. 19A] Fig. 19A is a block diagram illustrating hardware configuration examples of a camera apparatus 1900 and a lens apparatus 1913 according to a second embodiment of the present invention.

[Fig. 19B] Fig. 19B is a block diagram illustrating a functional configuration example of the camera apparatus 1900 according to the second embodiment of the present invention.

[Fig. 20] Fig. 20 is a block diagram illustrating a hardware configuration example of a pan head apparatus 2000 according to the second embodiment of the present invention.

[Fig. 21A] Fig. 21A illustrates an imaging method for imaging a social infrastructure according to the second embodiment of the present invention.

[Fig. 21B] Fig. 21B illustrates an imaging method for imaging a social infrastructure according to the second embodiment of the present invention.

[Fig. 22] Fig. 22 is a flowchart of operations of an imaging system according to the second embodiment of the present invention.

[Fig. 23] Fig. 23 illustrates a switch 2007 according to the second embodiment of the present invention.

[Fig. 24A] Fig. 24A is a diagram related to rotation control of the camera apparatus 1900 according to the second embodiment of the present invention.

[Fig. 24B] Fig. 24B is a diagram related to rotation control of the camera apparatus 1900 according to the second embodiment of the present invention.

[Fig. 24C] Fig. 24C is a diagram related to rotation control of the camera apparatus 1900 according to the second embodiment of the present invention.

[Fig. 25] Fig. 25 illustrates a configuration example of a table 2515 according to the second embodiment of the present invention.

Description of Embodiments

[First Embodiment]

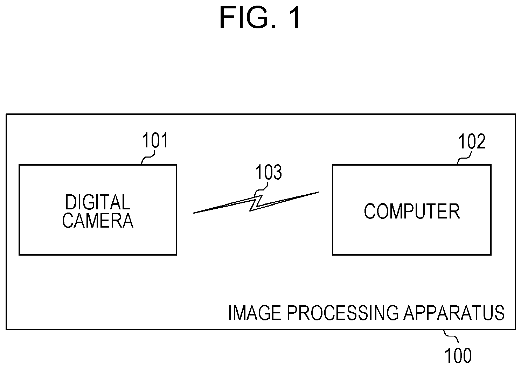

An image processing apparatus, an image processing method, and an image processing program according to a first embodiment of the present invention will be described below in detail with reference to some drawings. As illustrated in Fig. 1, an example in which the present invention is applied to an image processing apparatus 100 will be described, in which a digital camera 101 as an example of an imaging apparatus and a computer 102 as an example of an image processing apparatus are communicably connected to each other via a communication circuit 103. However, in the following description, a process performed by the computer 102 may also be performed by the digital camera 101. In addition, the digital camera 101 may be any given electronic device having an imaging function, and the computer 102 may be any given electronic device, or a computer in a server apparatus, that can perform the process described below. The computer 102 may also be a mobile type computer or a desktop type computer.

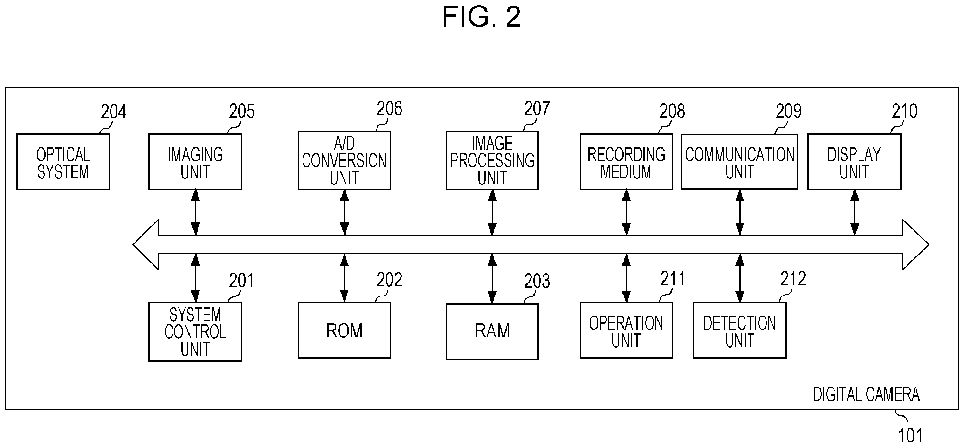

Fig. 2 is a block diagram illustrating a functional configuration example of the digital camera 101 according to the embodiment of the present invention. A system control unit 201 is a CPU, for example, and reads operation programs of the blocks included in the digital camera 101 from a ROM 202, loads them to a RAM 203, and executes them so as to control operations of the blocks included in the digital camera 101. The ROM 202 is a rewritable non-volatile memory and stores, in addition to the operation programs of the blocks included in the digital camera 101, parameters or the like that are necessary for the operations of the blocks. The RAM 203 is a rewritable volatile memory and is used as a temporary storage area of data that is output in the operations of the blocks included in the digital camera 101.

An optical system 204 forms a field image on an imaging unit 205. The imaging unit 205 is, for example, an imaging element such as a CCD or CMOS sensor, performs photoelectric conversion of an optical image that is formed by the optical system 204 on the imaging element of the imaging unit 205, and outputs an obtained analog image signal to an A/D conversion unit 206. In addition, an IS mechanism that reduces effects of camera shake is mounted in each of the optical system 204 and the imaging unit 205. The A/D conversion unit 206 applies an A/D conversion process to the input analog image signal and outputs obtained digital image data to the RAM 203 for storage.

An image processing unit 207 applies various types of image processing such as white balance adjustment, color interpolation, reducing/enlarging, and filtering to the image data stored in the RAM 203.

A recording medium 208 is a detachable memory card or the like, on which an image processed by the image processing unit 207, an image subjected to A/D conversion by the A/D conversion unit 206, and the like, which are stored in the RAM 203, are recorded as recorded images.

A communication unit 209 transmits an image data file or the like recorded on the recording medium 208 to an external apparatus in a wire or wireless manner.

A display unit 210 displays image data obtained through imaging, image data read from the recording medium 208, or the like or displays various menu screens. The display unit 210 also functions as an electronic view finder by displaying a live view image.

An operation unit 211 is an input device group for a user to input various instructions, settings, or the like to the digital camera 101 and includes keys and buttons that a typical digital camera has, such as a shutter button, a menu button, direction keys, and a decision key. In addition, when the display unit 210 is a touch display, the display unit 210 also serves as the operation unit 211. Note that the operation unit 211 may be configured to dispense with physical operations, such as a combination of a microphone and a voice command recognition unit.

A detection unit 212 includes a gyrosensor or a sensor and acquires angular velocity information, orientation information, or the like of the digital camera 101. Note that the orientation information includes information on an inclination or the like of the digital camera 101 relative to the horizontal direction.

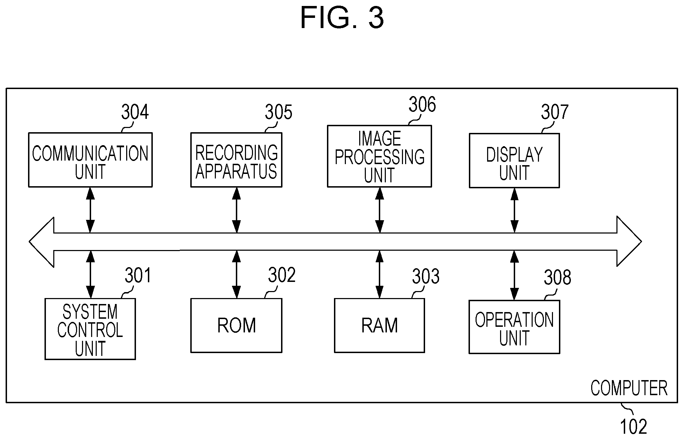

Fig. 3 is a block diagram illustrating a functional configuration example of the computer 102 according to this embodiment. A system control unit 301 is a CPU, for example, and reads programs from a ROM 302, loads them to a RAM 303, and executes them so as to control operations of the blocks included in the computer 102. The ROM 302 is a rewritable non-volatile memory and stores, in addition to the programs executed by the system control unit 301, parameters or the like that are necessary for controlling the blocks. The RAM 303 is a rewritable volatile memory, and each block included in the computer 102 is used as a temporary storage area of data that is output.

A communication unit 304 communicates with an external apparatus such as the digital camera 101 by wired or wireless communication. A recording apparatus 305 is a hard disk, for example, and stores image data or the like received by the communication unit 304 from the digital camera 101.

An image processing unit 306, for example, calculates a defocus amount, which will be described later, of image data that is loaded from the recording apparatus 305 to the RAM 303, estimates a depth direction from an image, or calculates information related to a deviation degree of the optical system and the imaging element from design positions.

A display unit 307 is used for displaying a GUI or various types of data provided by an OS or an application that works in the computer 102. The display unit 307 may be included in the computer 102 or may be connected as an external apparatus.

An operation unit 308 is an input device group for a user to input various instructions, settings, or the like to the computer 102 and typically includes a keyboard, a mouse, a trackpad, or the like. In addition, when the display unit 307 is a touch display, the display unit 307 also serves as the operation unit 308. Note that the operation unit 308 may be configured to dispense with physical operations, such as a combination of a microphone and a voice command recognition unit.

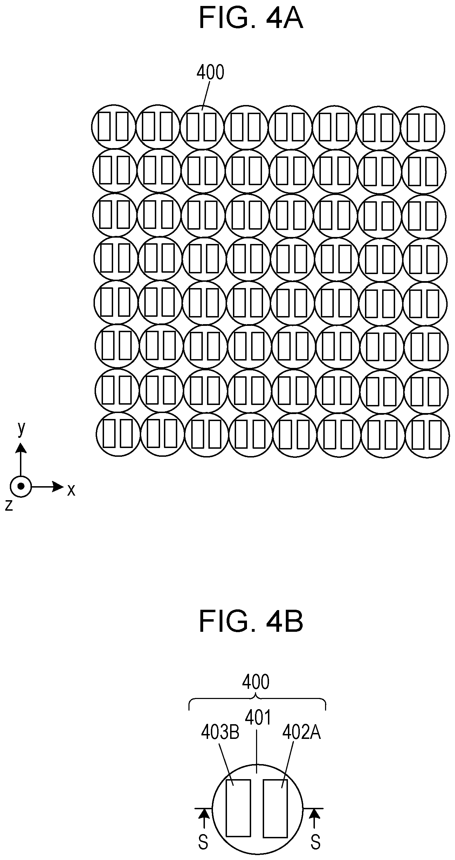

Fig. 4A illustrates an arrangement configuration of pixels in the imaging unit 205 in Fig. 2. As illustrated in Fig. 4A, a plurality of pixels 400 are two-dimensionally and regularly arranged in the imaging unit 205. Specifically, the plurality of pixels 400 are arranged in the form of a two-dimensional lattice, for example. Note that the arrangement configuration of the pixels 400 is not limited to the lattice-form arrangement configuration, and other arrangement configurations may also be employed.

Fig. 4B illustrates a pixel 400 illustrated in Fig. 4A in an enlarged manner. As illustrated in Fig. 4B, each of the pixels 400 includes a microlens 401 and a pair of photoelectric conversion units 402A and 403B (hereinafter referred to as pupil divided pixels 402A and 403B, respectively). Both of the pupil divided pixels 402A and 403B have an identical flat shape, and the flat shape has a rectangle shape whose longitudinal direction is the y-axis direction. In each of the pixels 400, the pupil divided pixels 402A and 403B are disposed to be axisymmetric about a perpendicular bisector along the y-axis direction of the microlens 401 as a symmetry axis. Note that the flat shape of the pupil divided pixels 402A and 403B is not limited to this, and other flat shapes may also be employed. In addition, the disposing manner of the pupil divided pixels 402A and 403B is not limited to this either, and other disposing manners may also be employed.

In this embodiment, from the pupil divided pixels 402A and 403B that are two-dimensionally and regularly arranged, an A image and a B image are output, respectively, as parallax images. In addition, an A+B image obtained by adding the A image and the B image is recorded on the recording medium 208 as a record still image. By configuring the imaging unit 205 as illustrated in Figs. 4A and 4B, a pair of light fluxes that pass through different regions of a pupil of the optical system 204 are made to form images as a pair of optical images, and these images can be output as the A image and the B image. Note that the method for acquiring the A image and the B image is not limited to the above method, and various methods may be employed. For example, parallax images acquired by imaging apparatuses such as a plurality of cameras installed with a space interval may be used as the A image and the B image. In addition, parallax images acquired by an imaging apparatus such as a single camera including a plurality of optical systems and imaging units may also be used as the A image and the B image.

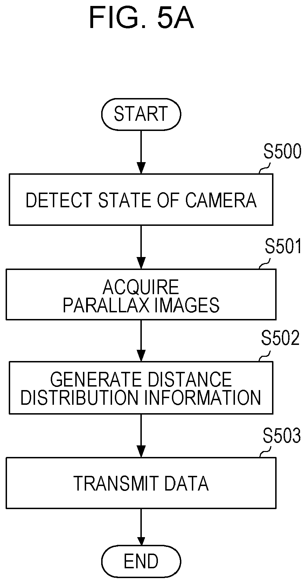

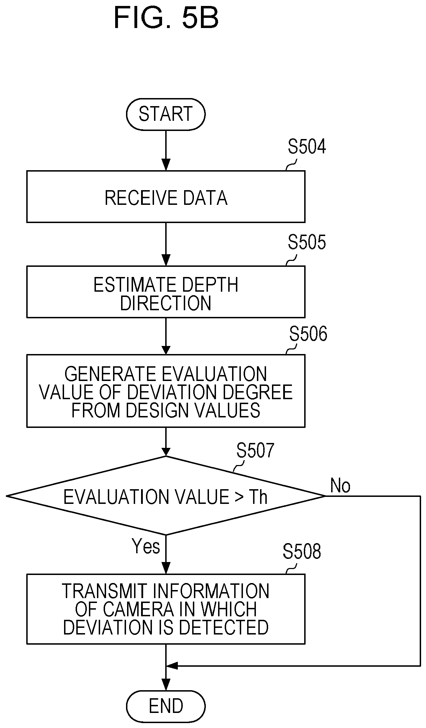

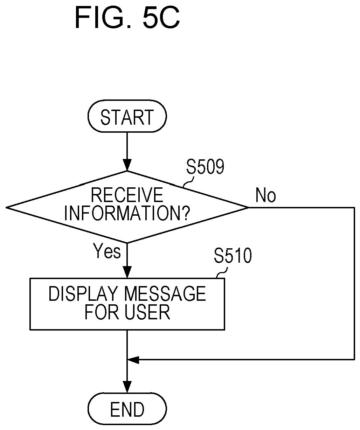

Now, operations of the image processing apparatus 100 will be described below. In response to input of an imaging instruction, such as full-press of the shutter button, through the operation unit 211 of the digital camera 101, the image processing apparatus 100 executes the processes illustrated in Figs. 5A, 5B, and 5C. Note that the processes in Figs. 5A and 5C are executed by the digital camera 101, and the process in Fig. 5B is executed by the computer 102.

First, in step S500, the system control unit 201 detects, from the detection unit 212, the state of the camera when the shutter button is pressed. Here, as the state of the camera, the slant of the digital camera 101 relative to the horizontal direction and the orientation of the top-bottom direction are detected.

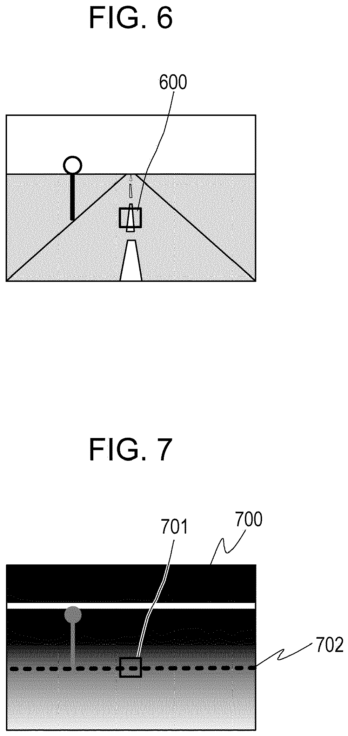

In the subsequent step S501, the system control unit 201 performs an imaging process in accordance with exposure conditions that are determined in an imaging preparation state and acquires the A image and the B image that are a pair of parallax images from the imaging unit 205. Note that the A image and the B image that are recorded on the recording medium 208 in advance may also be read and acquired. In addition, the A image and the B image may be added to be recorded as an image for recording a still image on the recording medium 208. The image for recording a still image in this embodiment is illustrated in Fig. 6. Fig. 6 is an image obtained by adding the A image and the B image that are captured. In addition, 600 is an autofocus frame.

In the subsequent step S502, the system control unit 201 controls the image processing unit 207 and outputs data indicating a spatial (two-dimensional) defocus amount distribution in an imaging range from the parallax images acquired in step S501. In the following description, the data indicating the spatial defocus amount distribution will be referred to as a defocus map. The defocus amount is a shift amount of focus from the distance where the optical system 204 focuses on and thus is a type of distance information. As for a method for acquiring the defocus amount, for example, a method of calculating a phase difference between the parallax images as in the method disclosed in Japanese Patent Laid-Open No. 2008-15754 may be used. Specifically, a relationship between the shift amount of the parallax images and the defocus amount is represented as the following expression

$$DEF = KX \cdot PY \cdot x \quad \cdots \quad (1)$$

In Expression (1), DEF is the defocus amount, PY is a detection pitch (pitch for disposing pixels of the same type), KX is a transform coefficient determined by a degree of an open angle of centers of gravity of a pair of light fluxes that pass through the pupil, and x is the shift amount of the parallax images.

In addition, the present invention is not limited to this, and a distribution of a shift amount that is the shift amount of the parallax images may also be acquired as a distance information distribution.

In addition, the distance information distribution may also be information represented in a unit of length such as micrometers obtained by multiplying the shift amount of the parallax images by the detection pitch PY.

In addition, the present invention is not limited to this, and the distance information distribution may be converted from the defocus amount into a distribution of an actual distance by further referring to a focus lens position.

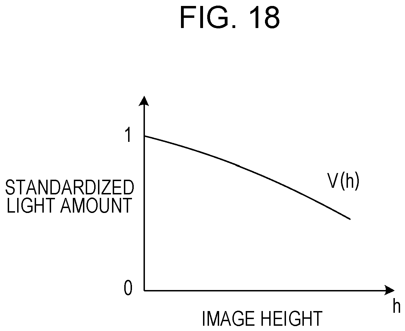

In addition, the present invention is not limited to this, and a distribution of a value obtained by normalizing the defocus amount by F$\delta$ (F is the f-number, and $\delta$ is the diameter of an acceptable circle of confusion) may also be acquired as the distance information distribution. This distribution represents a blurring amount with respect to $\delta$. Here, although an f-number for imaging may be applied to the entire distribution as the f-number F, to obtain a more accurate distribution of the blurring amount, an effective f-number (effective f-number) taking into account optical vignetting characteristics of the optical system 204 under imaging conditions is preferably applied. Fig. 18 is a graph illustrating optical vignetting characteristics V(h) in which the horizontal axis represents the distance from the optical center (image height) and the vertical axis represents the light amount standardized by setting the light amount of the center of the image height to 1 in each image height. Vignetting occurs depending on a lens frame or an aperture frame, and the light amount decreases as the image height increases (approaches an end in the imaging range) in Fig. 18. The optical vignetting characteristics have unique characteristics depending on lens. Here, an effective f-number F' at an image height h is represented as the following expression by referring to the optical vignetting characteristics.

$$F' = F / \sqrt{V(h)} \quad \cdots \quad (2)$$

A defocus map of the image in Fig. 6 is illustrated in Fig. 7. A defocus map 700 is represented by a continuous-valued grayscale that becomes whiter (pixel value is higher) as the distance is closer. In addition, 701 is an autofocus frame, and in-focus regions (defocus amount is zero) are represented in gray. In addition, 702 is a straight line connecting the in-focus regions.

Subsequently, in step S503, the system control unit 201 transmits the following pieces of information mainly including image data to the computer 102 through the communication unit 209.

- Image for recording a still image
- Defocus map
- Camera state detection information (information on detection of slant of camera)
- Autofocus frame position information
- Identification number (ID) of camera main body and identification number (ID) of attached lens
- Imaging information such as F-number and ISO sensitivity

The above pieces of information are recorded or transmitted in association with each other. For example, the above pieces of information may be recorded in Exif information if a JPEG format is used, or may be recorded in a single file as image additional information if a RAW data format is used. Alternatively, necessary information may be recorded or transmitted together with an image as a container file in which a plurality of associated pieces of data can be collectively stored. Alternatively, the pieces of information may be recorded or transmitted as different files without being collected together. For example, it is necessary to perform a process such as setting the same file name, storing them in the same folder, or sequentially transmitting the pieces of data in order (the receiver can recognize that the pieces of information are associated with each other on the basis of the order, type, or the like of the data) so that the data files can be grasped as being associated with each other. Since transmission control or the like in accordance with a file structure or a transmission protocol related to the recording or transmission is not directly related to the present invention, and a known method can be used, details will be omitted from the description. Note that after the above pieces of information may be recorded on the recording medium 208 and then may be transmitted to the computer 102 through the communication unit 209, or the recording medium 208 may be removed from the digital camera 101 to read the image data in the computer 102. In addition, the camera may not generate the defocus map (record information distribution), and the pair of parallax images may be recorded together with the above associated pieces of information, and the computer 102 may generate the defocus map.

In this embodiment, the process from step S504 to step S508 is performed by the computer 102. Since the process from step S504 to step S508 is performed by an apparatus different from the digital camera 101, a user is able to know the information related to the deviation degree of the optical system and the imaging element from the design positions without performing a special camera operation. In addition, although the defocus map is generated in the digital camera 101 in this example, the parallax images may be transmitted to the computer 102, and the computer 102 may generate the defocus map. When the calculation load on the digital camera 101 is heavy during continuous imaging, by splitting the calculation for generating the defocus map to the computer 102, the time for calculating the information related to the deviation degree of the optical system and the imaging element from the design positions can be reduced. In addition, by further transmitting information on the transform coefficient KX and the effective f-number F' that are determined uniquely by the lens in use and the imaging conditions, the computer 102 can generate various distance information distributions. In addition, the information on the transform coefficient KX and the effective f-number F' may be stored in the computer 102 in advance, and may be read from the stored information on the basis of the lens identification (ID) number and imaging information that are received.

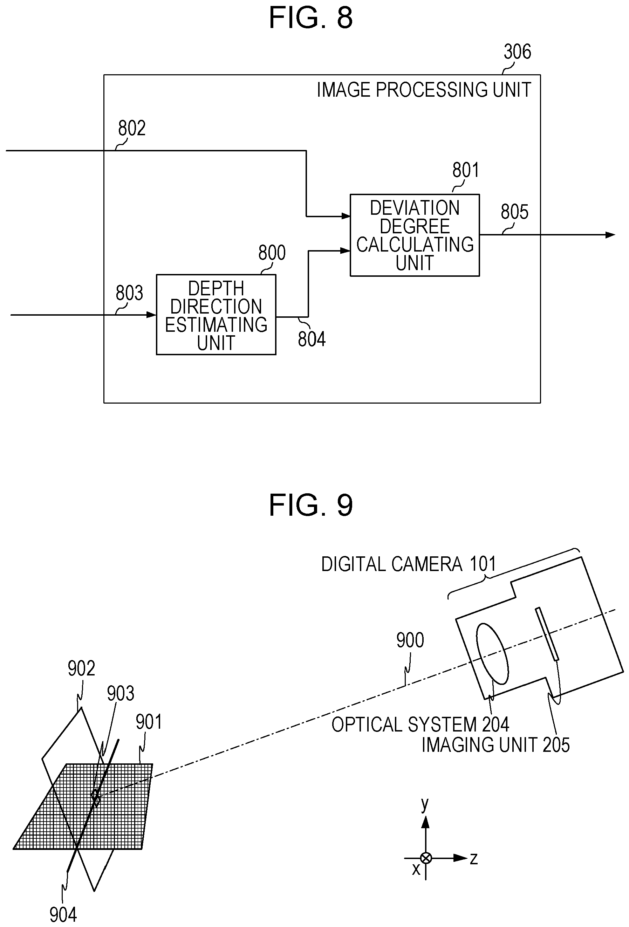

Fig. 8 is a block diagram schematically illustrating a functional configuration example of the image processing unit 306 included in the computer 102 according to this embodiment. Now, operations of the image processing unit 306 will be described below by further referring to Fig. 5B. Note that the operations of the image processing unit 306 are implemented in accordance with control by the system control unit 301.

Initially, the system control unit 301 receives the pieces of information transmitted in step S503 and loads the read data into the RAM 303 (step S504).

Subsequently, in step S505, a depth direction estimating unit 800 estimates a depth direction in an image on the basis of camera state detection information 803 (imaging conditions) at the time of acquiring the parallax images recorded on the RAM 303. In this example, the depth direction is estimated with reference to a plane on which the defocus amount becomes zero. Here, the plane on which the defocus amount becomes zero will be described with reference to Fig. 9.

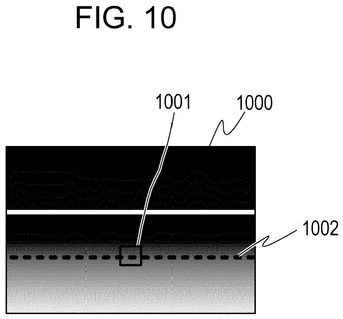

Fig. 9 illustrates imaging of a flat subject 901 on the ground in a state where the digital camera 101, in which the optical system and the imaging element are not shifted from the design positions, is overlooked and where the slant of the digital camera 101 relative to the horizontal direction (x-axis direction in Fig. 9) is zero. In addition, when an autofocus frame 903 is at a point where an optical axis 900 and the subject 901 intersect with each other, a plane connecting in-focus regions (hereinafter referred to as in-focus plane) is a plane 902 that is parallel to the imaging unit 205 and that intersects with the optical axis 900 perpendicularly. Furthermore, the in-focus plane 902 in a captured image of the subject 901 can also be represented by a straight line 904 that passes through the autofocus frame 903. Fig. 10 illustrates a defocus map 1000 of the captured image of the subject 901, an autofocus frame 1001 therein, and an in-focus plane 1002 therein. From Fig. 10, when imaging is performed in a state where the camera, in which the optical system and the imaging element are not shifted from the design positions, is overlooking and where the slant thereof relative to the horizontal direction is zero, the in-focus plane 1002 is a horizontal straight line with respect to the image. Furthermore, since the orientation of the top-bottom direction of the camera at the time of imaging is known, the part above the in-focus plane 1002 is away, and the part therebelow is near. That is, it can be estimated that the depth direction changes from the lower part of the captured image to the upper part thereof. The depth direction estimating unit 800 outputs an expression of the straight line representing the in-focus plane 1002 as depth estimation information 804.

From a defocus map 802 and the depth estimation information 804 (expression of the straight line representing the in-focus plane) obtained by the depth direction estimating unit 800, a deviation degree calculating unit 801 calculates information 805 related to the deviation degree of the optical system and the imaging element from the design positions, the optical system and the imaging element capturing the parallax images (step S506).

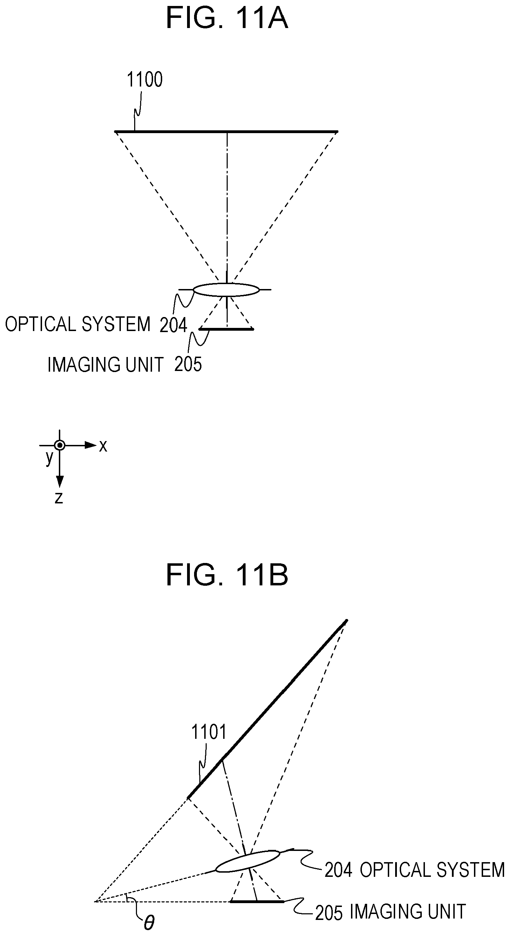

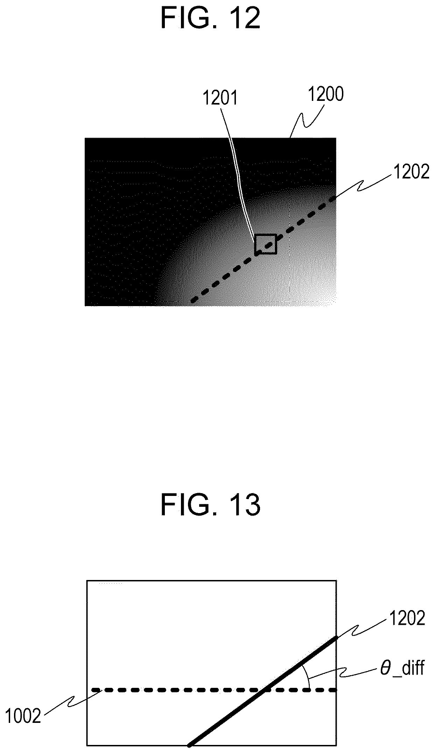

Here, a phenomenon that occurs when the optical system and the imaging element shift from the design positions will be described with reference to Figs. 11A and 11B. Fig. 11A illustrates a state where the optical system 204 and the imaging unit 205 are at the design positions. When imaging is performed in this state, an in-focus plane 1100 is parallel to the imaging unit 205. On the other hand, Fig. 11B illustrates a state where the optical system 204 shifts from the design position and an eccentricity occurs. In this case, based on the Scheimpflug principle, an in-focus plane 1101 is slanted in accordance with an angle θ formed by the optical system 204 and the imaging unit 205. In the state in Fig. 11B, in a state where the camera is overlooking and where the slant of the camera relative to the horizontal direction is zero, in Fig. 12, 1200 denotes a defocus map of a captured image of the flat subject on the ground, 1201 denotes an autofocus frame therein, and 1202 denotes an in-focus plane therein. From Fig. 12, it is understood that the depth changes from the lower right of the screen to the upper left thereof. Therefore, a deviation occurs from the depth change direction (Fig. 10) in a state where the optical system and the imaging element do not shift from the design positions. Accordingly, a relationship between a user's depth perception and the in-focus plane is deviated, which results in an imaging result not intended by the user.

The deviation degree calculating unit 801 calculates an angle θ_diff formed by an expression of the straight line representing the in-focus plane 1202 in the defocus map 802 and the straight line 1002 representing the in-focus plane estimated by the depth direction estimating unit 800, and causes the RAM 303 to store the angle θ_diff as the evaluation value 805 indicating the deviation degree. Fig. 13 illustrates θ_diff. As θ_diff is larger, the deviation of the optical system and the imaging element from the design positions is larger (calibration is needed). Note that when the camera is slanted relative to the horizontal direction at the time of imaging, the slanted angle may be subtracted from θ_diff for correction, and even with an image captured in a state where the camera is slanted relative to the horizontal direction, the effects of the present invention can be obtained.

In the subsequent step S507, the system control unit 301 compares the calculated θ_diff with a threshold value that is stored in advance, and performs step S508 if θ_diff is greater than the threshold value and ends the process if θ_diff is less than or equal to the threshold value.

In step S508, the system control unit 301 transmits the following pieces of information to the digital camera 101 through the communication unit 304 in order to notify that the optical system and the imaging element are shifted from the design positions in the camera used by the user.

- Identification number of the camera main body in which shift is detected
- Identification number of the lens for which shift is detected

In step S509, the system control unit 201 in the digital camera 101 determines whether the pieces of information transmitted from the computer 102 are received. If the pieces of information are received, step S510 is performed; if the pieces of information are not received, the process ends.

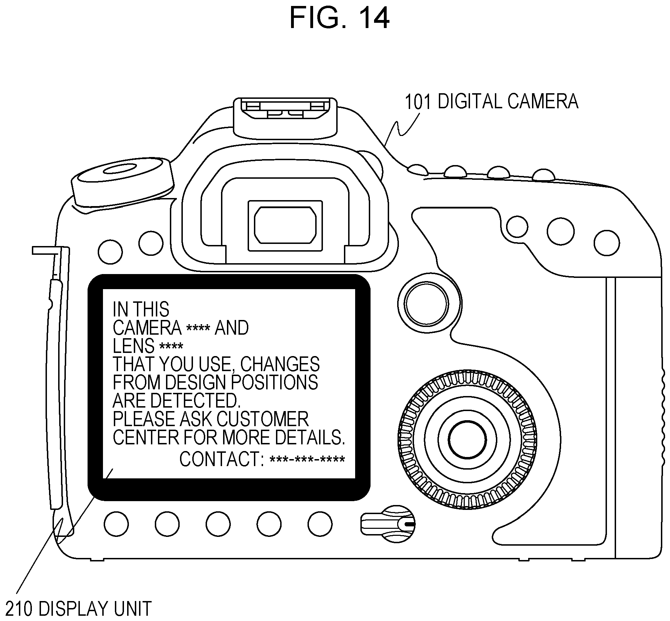

In step S510, the system control unit 301 outputs display as in Fig. 14 to the display unit 210 and recommends the user to have the camera and lens repaired at a customer center. The customer center receives the ID information of the camera and lens or the like together with the image data from the user (the digital camera 101), which is useful in the identification, statistics, or the like of repair/breakdown information.

In the above manner, according to this embodiment, the information related to the deviation degree of the optical system and the imaging element from the design positions can be calculated and can be notified to the user without hindering user convenience.

In addition, although a text informing the user that the optical system and the imaging element are shifted from the design positions is displayed in this embodiment, in order for the user to recognize the occurrence of the shift more easily, an image may be displayed on the display unit 210. Specifically, the display unit 210 may be configured to display the defocus map in grayscale in Fig. 12 generated in step S502 or a defocus map subjected to color-value conversion by lookup table conversion or the like.

In addition, although information is displayed to the user in this embodiment when the shift of the optical system or the imaging element from the design position occurs, information may also be displayed when the occurrence of the shift is not detected or in both cases. According to such a configuration, the user is able to know whether calibration is needed when the user needs the determination results immediately.

In addition, although a case where the defocus map is generated by calculating a parallax amount by using the pair of parallax images is described as an example in this embodiment, the present invention is not limited to this. As a method for generating the defocus map, for example, a DFD (Depth From Defocus) method may be employed, in which the defocus map is acquired from correlation between two images with different in-focus positions or f-numbers. Since the information related to the deviation degree of the optical system and the imaging element from the design positions can be calculated by using an image acquired on an aperture bracket imaging mode, opportunities for detecting a shift are increased, and the user can be provided with information at appropriate timing.

In addition, although the depth direction in an image is estimated from the camera state detection information in this embodiment, the present invention is not limited to this. For example, the depth direction can also be estimated by using information regarding a vanishing point. With such a configuration, even if a camera does not include a gyrosensor or a sensor that detects the state of the camera, the effects of the present invention can be obtained, and user convenience is increased. Now, a method for estimating the depth direction by using vanishing point detection and for calculating the information related to the deviation degree of the optical system and the imaging element from the design positions will be described below.

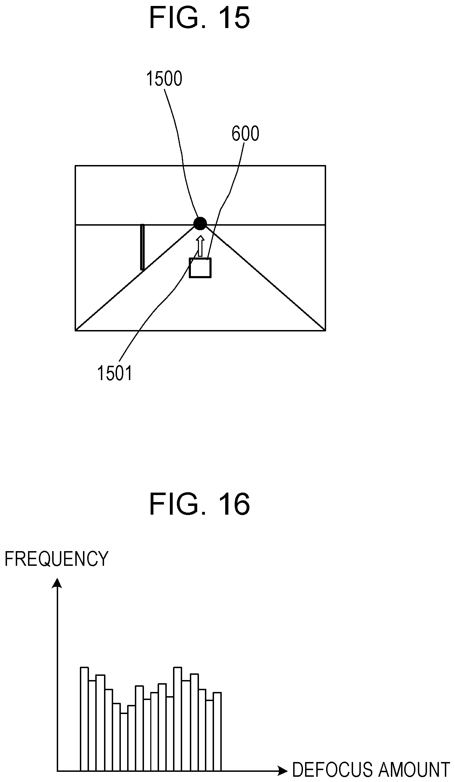

The vanishing point is a point where, when parallel lines in a three-dimensional space are projected onto an image plane by transparent transformation, straight lines on a screen plane corresponding to these parallel lines converge. That is, the vanishing point is a "point at infinity" on a plane image on which a space that actually has a depth is projected and is recognized as a point where extension lines of lines parallel to the depth direction intersect with each other or a point where extensions of planes that extend in the depth direction converge at the point at infinity. Thus, a plurality of straight lines in the image are detected by a known method such as the Hough transformation, and a point where the largest number of detected straight lines converge may be detected as the vanishing point. A result of detecting a vanishing point in Fig. 6 is illustrated in Fig. 15.

In Fig. 15, 1500 is a vanishing point. In addition, the depth direction can be estimated as a direction 1501 from the autofocus frame 600 toward the vanishing point. The depth direction estimating unit 800 outputs the direction 1501 toward the vanishing point as the depth direction estimation information 804.

The deviation degree calculating unit 801 calculates an inclination (change direction) of the defocus amount near the autofocus frame in the defocus map 802 by using a known technique. Subsequently, from a difference from the depth direction estimation information 804, the deviation degree calculating unit 801 calculates an evaluation value indicating the deviation degree of the optical system and the imaging element from the design positions. Specifically, the direction toward the vanishing point and the inclination direction of the defocus amount are each treated as a vector, and a difference between the vectors is the evaluation value. As the shift of the optical system and the imaging element from the design points is larger, the evaluation value is larger.

In addition, a method for estimating the depth direction in the image with reference to features extracted from the image can use not only the above vanishing point detection but also information regarding a change in the density of texture. The depth method in the image is detected with reference to the change in the density of texture. As the method, for example, the method described in "Texture Structure Classification and Depth Estimation using Multi-Scale Local Autocorrelation Features", KANG Y, HASEGAWA O, NAGAHASHI H (Tokyo Inst. Technol.), JST-PRESTO (NPTL) can be employed.

Specifically, when a uniform texture is present in the image (for example, the road in Fig. 6) with reference to the image for recording a still image, the depth direction estimating unit 800 uses the fact that the density of texture decreases as the distance increases. That is, if a region where the density of the same texture gradually decreases is detected in the image, the depth direction estimating unit 800 determines that a plane covered with the predetermined texture is becoming away from the imaging position. The direction from the front to the opposite side is output as the depth direction estimation information 804. In particular, in the in-focus regions, a fine texture is likely to be detected, by performing the above determination on the vicinity of the autofocus frame, the depth direction can be estimated with high accuracy. Furthermore, by using known typical object detection, a region where a uniform texture, such as a ground like a road, a water surface, or a hedge that is a structure constructed in the perpendicular direction of the ground or water surface, is likely to be present may be detected in advance, and a target region may be limited. Thus, a processing time for estimating a distribution of positions in the depth direction can be reduced.

In addition, as in a case of using the vanishing point, the deviation degree calculating unit 801 sets, as an evaluation value, a difference between the vector of the inclination (change direction) of the defocus amount near the autofocus frame in the defocus map 802 and the vector of the depth direction estimated from the change in the density of texture.

In addition, in this embodiment, the evaluation value indicating the deviation degree of the optical system and the imaging element from the design positions is calculated from a single captured image, and it is determined whether a shift has occurred. However, the present invention is not limited to this. The determination may be performed when the number of images captured by the user reaches a certain reference number. By performing the determination based on evaluation values in a plurality of captured images, a degree of determination reliability as to whether a shift has occurred can be increased. In addition, for conditions as to whether to inform the user that the occurrence of a shift of the optical system and the imaging element from the design positions is detected, by checking whether the number of images in which the shift is detected reaches a certain reference number, the degree of determination reliability can be further increased.

In addition, instead of determining the deviation degree of the optical system and the imaging element from the design positions for all of the captured images, a determination process of the deviation degree is preferably performed after evaluating in advance whether an image among a large number of images is appropriate for determination of the deviation degree. Specifically, by performing the above typical object detection, evaluation is performed as to whether a uniform texture such as a road is present and whether an image is appropriate for estimating the depth direction. With such a configuration, the processing time for determining the deviation degree can be reduced. In addition, a subject in which a texture such as a road is present is also appropriate for detecting a phase difference between the parallax images in step S502, and thus, a more accurate deviation degree evaluation value can be expected. In addition, by recording known GPS information as image accessory information, it is possible to determine whether a subject in which a texture such as a road is present is likely to be included in a captured image. By selecting an image in advance in which a texture can be expected to be included from among a large number of images captured by the user, the time for calculating an evaluation result with a high degree of reliability can be reduced. In addition, in a case of a camera with a detachable optical system, statistics are collected as to whether a shift of the optical system and the imaging element from the design positions can be detected for each attached lens. This makes it possible to determine whether a shift has occurred in the optical system or in the imaging element, and to provide the user with a more detailed determination result.

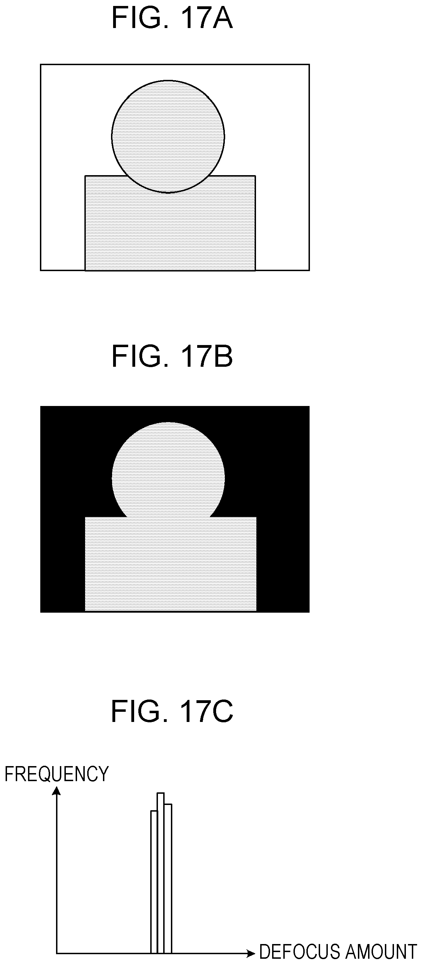

In addition, in the deviation degree calculating unit 801, by taking into account the following details in order to obtain the inclination of the defocus map 802 with high accuracy, an evaluation result with a high degree of reliability can be obtained. Specifically, a histogram (statistics information) of the calculated defocus map is acquired, and, on the basis of the shape of the histogram, it is determined whether the inclination of the defocus amount can be obtained with high accuracy. Although description will be given below, an image in which the histogram has a large width and a smooth change is preferably selected. Fig. 16 illustrates a histogram of the defocus map in Fig. 7. From Fig. 16, the defocus amount is widely distributed from the front to the opposite side, and also, the change in the defocus amount is smooth. Thus, the image in Fig. 7 can be appropriate for evaluating the change direction of the defocus amount in the entire image. On the other hand, Fig. 17B illustrates a defocus map of an image of a bust shot of a person in portrait imaging as illustrated in Fig. 17A, and Fig. 17C illustrates a histogram thereof. Since the defocus amount in the image concentrates to the person of the bust shot, it is understood that the image is not appropriate for evaluating the change direction of the defocus amount in the entire image. In the deviation degree calculating unit 801, the histogram of the defocus map is checked before being compared with the depth direction estimation information 804, and, if the image is not appropriate for evaluating the deviation degree, the determination process is suspended, and, thereby, the calculation time can be reduced.

In addition, in order to acquire a phase difference between the parallax images with high accuracy in step S502, a high S/N image may be selected. Thus, from among a large number of captured images, an image captured with a sensitivity as low as possible is preferentially selected, and, thereby, the degree of reliability of the evaluation value can be increased.

In addition, since the phase difference between the parallax images is influenced by an aberration in the optical system 204, the aberration that is grasped as design information of the optical system is preferably corrected before being compared with the result of estimation by the depth direction estimating unit 800. In addition, the region to be compared may be limited to a region where the influence of the aberration is small. In this manner, an evaluation result with a higher degree of reliability can be calculated.

In addition, in step S510, upon reception of detection information on the occurrence of the shift of the optical system and the imaging element from the design positions, display that encourages the user to have the camera and lens repaired at a customer center is output to the display unit of the digital camera 101. However, other solutions are also possible. Specifically, in step S508, the evaluation value 805 indicating the deviation degree is further transmitted to the digital camera 101. In accordance with the evaluation value 805 indicating the deviation degree, by driving the IS mechanisms mounted on the optical system and the imaging unit so as to approach a state where no shift has occurred for the optical system and the imaging element from the design positions, simple calibration can be performed. Alternatively, with reference to the evaluation value 805 indicating the deviation degree, by performing image processing (sharpness or blur processing) on a region where the in-focus plane is slanted, the image can be processed so as to approach an image obtained in a state where no shift has occurred for the optical system and the imaging element from the design positions. Specifically, blur processing is performed on a region where the defocus amount is close to an in-focus state compared with a state where no shift has occurred. In contrast, sharpness processing is performed on a region that is close to the background or the front compared with the original defocus amount. With the above configuration, even in a situation where the user cannot have the camera and lens repaired, an image with a depth of field intended by the user can be acquired, and user convenience can be increased.

In addition, the detection information on the occurrence of the shift of the optical system and the imaging element from the design positions may also be transmitted to the customer center in addition to the camera of the user. The customer center manages customer information registered by the user themself and also information regarding all owned devices, and records the number of times of the occurrence of the shift of the optical system and the imaging element from the design positions and the number of times of the maintenance, and, thereby, user convenience can be further increased such as reduction in a repair time.

In addition, when the camera and the lens used by the user for imaging are integrated, the display unit 201 may be configured to present to the user whether to execute an operation mode for isolating a cause of the occurrence to the optical system or the imaging element. In response to the user's selection of the operation mode for isolating the cause, the display unit 201 is instructed to encourage the user to capture an image appropriate for isolating the cause. As specific details of the instruction, the user is to paste a piece of graph paper on a wall that the user faces and capture images while changing imaging conditions (focal length, focus lens position, aperture) of the optical system. As a result of analysis, if the determination results change by changing the imaging conditions of the optical system, the cause is the lens; if the occurrence of the shift is detected regardless of the imaging conditions, the cause is the imaging element. With such a configuration, the cause of the occurrence of the shift of the optical system and the imaging element from the design positions can be found, and more appropriate notification or repair can be performed.

[Second Embodiment]

An image processing apparatus, an image processing method, and an image processing program according to a second embodiment of the present invention will be described below in detail with reference to some drawings. Note that substantially the same components as those in the image processing apparatus according to the above first embodiment are denoted by the same reference numerals and will be omitted from the description or will be briefly described.

The first embodiment has described an embodiment in which the information related to the deviation degree of the optical system and the imaging element from the design positions, which is an intrinsic parameter of the camera apparatus 100, is calculated and is notified to the user. The second embodiment of the present invention will describe an embodiment in which calibration of a position or an orientation of the image processing apparatus, which is an extrinsic parameter, is performed.

First, an imaging system according to this embodiment will be described. The imaging system according to this embodiment is to image an inspection target surface of a structure that is a target of social infrastructure inspection, and particularly is to easily face and image the inspection target surface or evaluate a captured image. The imaging system according to this embodiment includes a camera apparatus as an imaging apparatus that captures a moving image or captures a still image on a regular/irregular basis, a lens apparatus to be attached to the camera apparatus, and a pan head apparatus for rotating the camera apparatus.

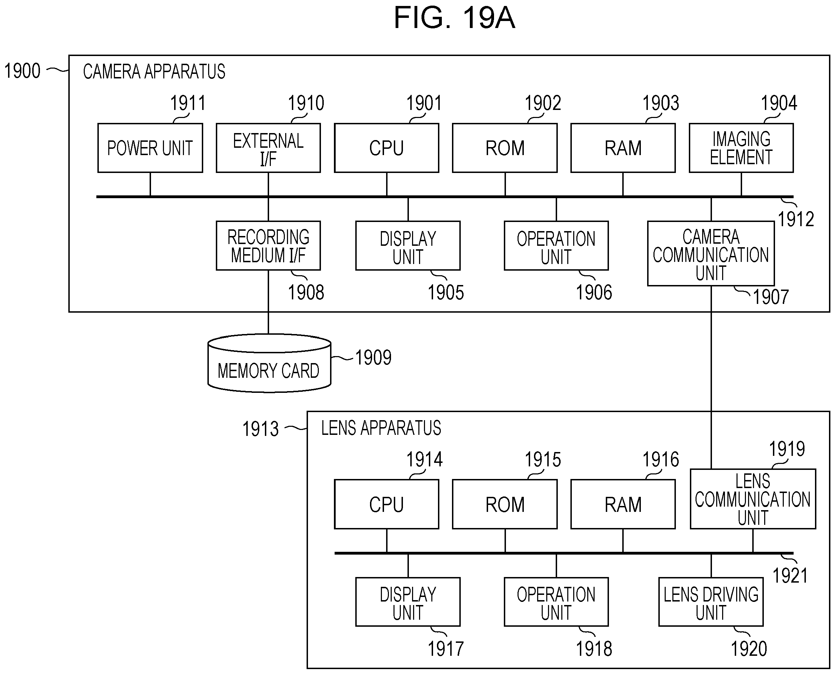

First, hardware configuration examples of a camera apparatus 1900 and a lens apparatus 1913 according to this embodiment will be described with reference to the block diagram in Fig. 19A. Note that the imaging apparatus in this embodiment may also be configured as the digital camera 101 as in the first embodiment. Fig. 19A illustrates a state where the lens apparatus 1913 is attached to the camera apparatus 1900.

First, a hardware configuration example of the camera apparatus 1900 will be described. The camera apparatus 1900 according to this embodiment acquires a distance information distribution at a plurality of positions in an imaging range of the camera apparatus 1900, acquires information on an instruction for rotating or translating the camera apparatus 1900 on the basis of a difference between pieces of the acquired distance information, and outputs the acquired information. Here, the distance information and the distance information distribution may be, as in the first embodiment, any of an image shift amount and an image shift amount distribution between a pair of parallax images, or a defocus amount and a defocus map or subject distance information and a subject distance map acquired by any means.

A CPU (Central Processing Unit) 1901 performs various processes by using computer programs or data stored in a ROM (Read-Only Memory) 102 or a RAM (Random Access Memory) 1903. Thus, the CPU 1901 controls operations of the entirety of the camera apparatus 1900 and also performs or controls processes that will be described later as processes performed by the camera apparatus 1900.

The ROM 1902 stores setting data of the camera apparatus 1900, a computer program or data related to starting of the camera apparatus 1900, a computer program or data related to basic operations of the camera apparatus 1900, and the like.

The RAM 1903 has an area for storing computer programs or data read from the ROM 1902 or computer programs or data read from a memory card 1909 via a recording medium I/F 1908. The RAM 1903 further has an area for storing a captured image output from an imaging element 1904, computer programs or data received from an external apparatus via an external I/F 1910, or data received from the lens apparatus 1913 through a camera communication unit 107. The RAM 1903 further has a work area used when the CPU 1901 performs various processes. In this manner, the RAM 1903 can provide various areas as appropriate.

The pixel arrangement of the imaging element 1904 has the same arrangement configuration as the imaging unit 205 in Fig. 2, and generates and outputs a captured image in accordance with light that enters via the lens apparatus 1913. A display unit 1905 is a liquid crystal display (LCD), an organic EL display (OLED), or the like, and is a device that displays an image or a text on a display screen or a finder screen. Note that the display unit 105 may not be included in the camera apparatus 1900 and may be, for example, an external device that is communicable with the camera apparatus 1900 wirelessly and/or wirelessly.

An operation unit 1906 is a user interface such as a button, a dial, a touch panel, or a joystick, and can input various instructions to the CPU 1901 by user operation.

The camera communication unit 1907 performs data communication between the camera apparatus 1900 and the lens apparatus 1913. The recording medium I/F 1908 is an interface for attaching the memory card 1909 to the camera apparatus 1900, and the CPU 1901 reads and writes data from and to the memory card 1909 via the recording medium I/F 1908.

As the memory card 1909, for example, a card-type recording medium such as SD, CF, CFexpress, XQD, or CFast is known. In addition, the memory card 109 may also record data on an external apparatus via a wireless network.

The external I/F 1910 is a communication interface for data communication with an external apparatus, and the CPU 1901 performs data communication with the external apparatus via the external I/F 1910. A power unit 1910 supplies and manages power in the camera apparatus 1900.

The CPU 1901, the ROM 1902, the RAM 1903, the imaging element 1904, the display unit 1905, the operation unit 1906, the camera communication unit 1907, the recording medium I/F 1908, the external I/F 1910, and the power unit 1911 are all connected to a system bus 1912.

Next, a hardware configuration example of the lens apparatus 1913 will be described. A CPU 1914 performs various processes by using computer programs or data stored in a ROM 1915 or a RAM 1916. Thus, the CPU 1914 controls operations of the entirety of the lens apparatus 1913 and also performs or controls processes that will be described later as processes performed by the lens apparatus 1913.

The ROM 1915 stores setting data of the lens apparatus 1913, a computer program or data related to starting of the lens apparatus 1913, a computer program or data related to basic operations of the lens apparatus 1913, and the like.

The RAM 1916 has an area for storing computer programs or data read from the ROM 1915 or data received from the camera apparatus 1900 by a lens communication unit 1919. The RAM 1916 further has a work area used when the CPU 1914 performs various processes. In this manner, the RAM 1916 can provide various areas as appropriate.

The lens communication unit 1919 performs data communication between the camera apparatus 1900 and the lens apparatus 1913. For example, the lens communication unit 1919 receives control information from the camera apparatus 1900 to the lens apparatus 1913, transmits an operation state or the like of the lens apparatus 1913 to the camera apparatus 1900, or receives power supply from the camera apparatus 1900.

A display unit 1917 is a liquid crystal display (LCD), an organic EL display (OLED), or the like, and is a device that displays an operation state or the like of the lens apparatus 1913. Note that the display unit 1917 may not be included in the lens apparatus 1913 and may be, for example, an external device that is communicable with the lens apparatus 1913 wirelessly and/or wirelessly.

An operation unit 1918 is a user interface such as a button, a dial, a touch panel, or a joystick, and can input various instructions to the CPU 114 by user operation. In addition, an instruction that is input by the user operating the operation unit 1918 can be transmitted to the camera apparatus 1900 by the lens communication unit 1919.

A lens driving unit 1920 controls an optical lens included in the lens apparatus 1913 on the basis of an instruction from the CPU 1901 or the CPU 114 and thus controls the aperture, focus, zoom focal point, camera shake correction, and the like. Light that enters via the optical lens after the aperture, focus, zoom focal point, camera shake correction, and the like are controlled by the lens driving unit 1920 is received by the above imaging element 1904, and the imaging element 1904 generates and outputs a captured image in accordance with the received light.

The CPU 1914, the ROM 1915, the RAM 1916, the lens communication unit 1919, the display unit 1917, the operation unit 1918, and the lens driving unit 1920 are all connected to a system bus 1921.

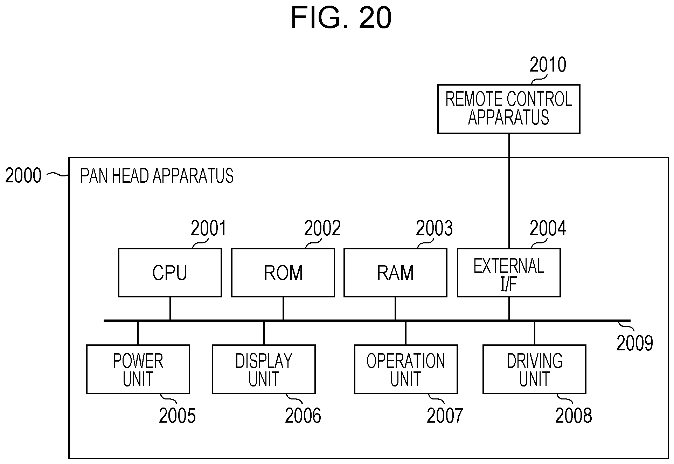

Next, a hardware configuration example of a pan head apparatus 2000 according to this embodiment will be described with reference to the block diagram in Fig. 20.

A CPU 2001 performs various processes by using computer programs or data stored in a ROM 2002 or a RAM 2003. Thus, the CPU 2001 controls operations of the entirety of the pan head apparatus 2000 and also performs or controls processes that will be described later as processes performed by the pan head apparatus 2000.

The ROM 2002 stores setting data of the pan head apparatus 2000, a computer program or data related to starting of the pan head apparatus 2000, a computer program or data related to basic operations of the pan head apparatus 2000, and the like.

The RAM 2003 has an area for storing computer programs or data read from the ROM 2002. The RAM 2003 further has a work area used when the CPU 2001 performs various processes. In this manner, the RAM 2003 can provide various areas as appropriate.

An external I/F 2004 is a communication interface for acquiring various instructions from a remote control apparatus 2010 by wireless or wired communication. The remote control apparatus 2010 is an apparatus for inputting various instructions to the pan head apparatus 2000 and, for example, can input a change instruction for changing a pan angle or a tilt angle of the camera apparatus 1900 mounted on the pan head apparatus 2000. The external I/F 2004 is also communicable with the camera apparatus 1900 mounted on the pan head apparatus 2000.

A power unit 2005 supplies and manages power in the pan head apparatus 2000. A display unit 206 is a liquid crystal display (LCD), an organic EL display (OLED), or the like, and is a device that displays an operation state or the like of the pan head apparatus 2000. Note that the display unit 2006 may not be included in the pan head apparatus 2000 and may be, for example, an external device that is communicable with the pan head apparatus 2000 wirelessly and/or wirelessly.

An operation unit 2007 is a user interface such as a button, a dial, a touch panel, or a joystick, and can input various instructions to the CPU 2001 by user operation.

A driving unit 2008 includes a base (fixing member) that fixes the camera apparatus 1900 and a driving mechanism that pans the base, tilts the base, or translates the base in XYZ directions. By controlling the driving mechanism, the driving unit 2008 controls the pan angle, the tilt angle, and the position in the XYZ directions of the camera apparatus 1900 on the basis of an instruction or the like received from the remote control apparatus 210 via the external I/F 2004. In addition, in this embodiment, the pan, tilt, and imaging position of the camera apparatus 1900 are controlled by mounting the camera apparatus 1900 on the pan head apparatus 2000 described above. However, the present invention is not limited to this and can be applied to, for example, an apparatus in which at least one of the pan, tilt, and imaging position of the camera apparatus 1900 is controlled by movement of the apparatus itself, such as a drone.

The CPU 2001, the ROM 2002, the RAM 2003, the external I/F 2004, the power unit 2005, the display unit 2006, the operation unit 2007, and the driving unit 2008 are all connected to a system bus 2009.

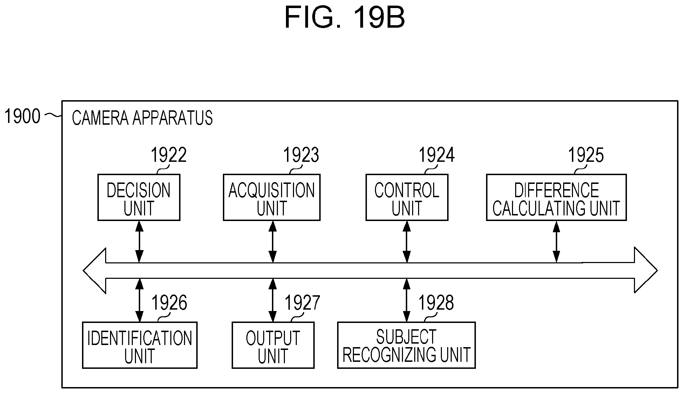

Next, a functional configuration example of the camera apparatus 1900 will be described with reference to the block diagram in Fig. 19B. Although each functional unit illustrated in Fig. 19B mainly performs a process in the following description, actually, the CPU 1901 executes a computer program corresponding to the functional unit, thereby executing the operation of the functional unit. In addition, at least part of the functional units illustrated in Fig. 19B may be implemented by hardware.

A subject recognizing unit 1928 recognizes whether an inspection target surface of a structure that is a target of social infrastructure inspection is included in a captured image by using known typical object detection. Specifically, the subject recognizing unit 1928 stores in advance a feature quantity related to the structure that is the target of infrastructure inspection and compares an image obtained by imaging and the feature quantity of a stored image. This result is also used as information for estimating a depth direction in the image. As a result of recognition, if the inspection target surface of the structure that is the target of social infrastructure inspection is imaged, a calibration process is performed such that the camera apparatus 1900 is in a facing relationship with respect to the inspection target surface of the structure. Here, if the inspection target surface is flat, since the camera and the structure is in a facing relationship, the defocus amount in the imaging range is supposed to be almost uniform. As an object of calibration, as in the method for determining the deviation degree of the optical system and the imaging element from the design positions described in the first embodiment, a position and an orientation of the camera apparatus 1900 may be corrected such that the values in the distance information distribution in the imaging range become uniform (fall within a predetermined range). However, this embodiment hereinafter illustrates, as an example, a method of simply setting control of a pan or tilt direction on the basis of the defocus amount of a partial region within the imaging range.

A decision unit 1922 acquires setting information indicating "a rotation direction and a translation direction for operating the camera apparatus 1900 in order that the camera apparatus 1900 faces the inspection target surface of the structure that is the target of social infrastructure inspection". The setting information is determined, for example, by a user operating the operation unit 1906. If driving of the camera indicated by the setting information is a rotation direction and a lateral direction (pan direction), the decision unit 1922 sets each of two regions that are arranged in a left-right direction within the imaging range of the camera apparatus 1900, as a "region for acquiring the defocus amount". (For example, a position near a left end and a position near a right end within the imaging range). Here, a minimum unit of each region is 1 pixel.

On the other hand, if driving of the camera indicated by the setting information is a rotation direction and a longitudinal direction, the decision unit 1922 sets each of two regions that are arranged in a top-bottom direction within the imaging range of the camera apparatus 1900, as the "region for acquiring the defocus amount". (For example, a position near an upper end and a position near a lower end within the imaging range). Here, a minimum unit of each region is also 1 pixel.

In addition, if driving of the camera indicated by the setting information is translation, the decision unit 1922 sets each of four regions that are arranged in the top-bottom and left-right directions within the imaging range of the camera apparatus 1900, as the "region for acquiring the defocus amount". Here, a minimum unit of each region is also 1 pixel.

In addition, in this embodiment, instead of using the setting information that is set by the user (or regardless of the setting information), as in the first embodiment, the distance information may be acquired in a plurality of regions, that is, the distance information distribution may be acquired, and driving of the pan head apparatus 2000 (the position and orientation of the camera) may be controlled on the basis of an analysis result of the distribution information. At this time, the "region for acquiring the defocus amount" is, for example, the entire region in which the defocus amount can be acquired. By acquiring the distance information distribution, for example, a two-dimensional or three-dimensional slant of the distance information is obtained by plane detection, the position and orientation of the camera may be controlled such that the slant faces and becomes close to zero in each direction.

A control unit 1924 acquires the defocus amount from the "region for acquiring the defocus amount" decided by the decision unit 1922 within the imaging range of the camera apparatus 1900. An acquisition unit 1923 acquires the defocus amount acquired by the control unit 1924. A difference calculating unit 1925 calculates a difference between a defocus amount and another defocus amount acquired by the acquisition unit 1923.

An identification unit 1926 identifies notification information for notifying "a rotation degree or a translation degree (including direction) for driving the camera apparatus 1900" on the basis of the difference calculated by the difference calculating unit 1925. An output unit 1927 outputs the notification information identified by the identification unit 1926 to the pan head apparatus 2000 via the external I/F 1910. The pan head apparatus 2000 acquires the notification information via the external I/F 2004, and, on the basis of the notification information, controls the driving unit 2008 so as to set the camera apparatus 1900 at the desired position and orientation.

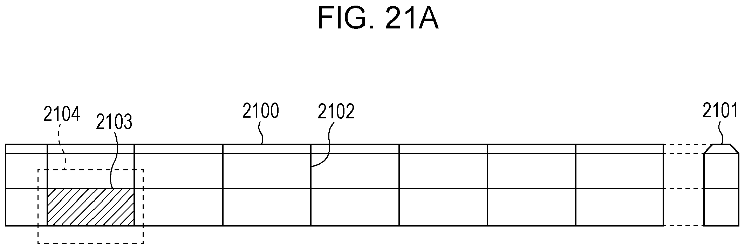

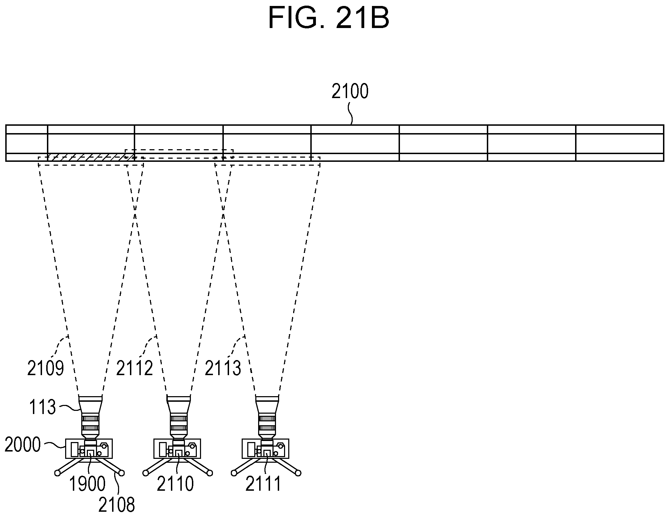

In this embodiment, the social infrastructure that is the inspection target is imaged by using such an imaging system, and, on the basis of a captured image that is obtained by the imaging, the social infrastructure is inspected. An imaging method of imaging the social infrastructure by using the imaging system according to this embodiment will be described with reference to Figs. 21A and 21B.

Fig. 21A illustrates an example of the inspection target surface of the social infrastructure that is the inspection target. A social infrastructure 2100 illustrated in Fig. 21A is a wall-like structure that has a side surface 2101 and that is laterally long. Reference numeral 2102 denotes a joint part that occurs when the social infrastructure 2100 is divided on the basis of a plan and is constructed by construction jointing. The part 2102 is also called a construction jointing part, but is herein called a joint for easy understanding. The joint part 2102 can be visually observed, and thus is also used as a unit for inspection operation. Reference numeral 2103 denotes a region that is a target of a single inspection (inspection target region), and the imaging system images an imaging region 2104 including the inspection target region 2103. In a captured image obtained by imaging the imaging region 2104, "a partial image corresponding to a peripheral area of the inspection target region 2103 in the imaging region 2104" is information for grasping a position relationship with an adjacent inspection target region. Thus, this partial image is used for alignment when images are combined to a single image including the entire social infrastructure 2100. In addition, the partial image corresponding to the peripheral area is also used for inspection of deformation in a wide range that is not limited to a single inspection target region.

Fig. 21B illustrates a state where the imaging region 2104 is imaged by using the imaging system according to this embodiment. In Fig. 21B, the camera apparatus 1900 is attached to the pan head apparatus 2000 having a tripod 2108, and the lens apparatus 1913 is attached to the camera apparatus 1900. The width (size in lateral direction in the drawing) of an imaging range 2109 on the inspection target surface that is imaged by the camera apparatus 1900 and the lens apparatus 1913 in combination corresponds to the width (size in lateral direction in the drawing) of the imaging region 2104.

Upon completion of imaging of the inspection target region 2103, an inspection target region that is adjacent to the inspection target region 2103 and that is yet to be imaged is imaged. The imaging system according to this embodiment is moved to a position denoted by reference numeral 2110, and the inspection target region in an imaging range 2112 is imaged in substantially the same manner. Upon completion of imaging at the position denoted by reference numeral 2110, to image an inspection target region that is adjacent to the inspection target region and that is yet to be imaged, the imaging system according to this embodiment is moved to a position denoted by reference numeral 2111, and the inspection target region in an imaging range 2113 is imaged in substantially the same manner. When the camera apparatus 1900 is mounted on a mobile object such as a drone, a user manually or automatically moves the mobile object to each imaging position and sequentially performs imaging.

Here, in this embodiment, the camera apparatus 1900 needs to face an inspection target region. In this embodiment, it is determined whether the camera apparatus 1900 faces the inspection target region. If the camera apparatus 1900 does not face the inspection target region, a notification is issued for rotating or translating the camera apparatus 1900 so as to face the inspection target region.

In order to issue this notification, as described above, the control unit 1924 acquires the defocus amount of the position decided by the decision unit 1922. The method for acquiring the defocus amount is the same as that in step S502 in the first embodiment and thus is omitted from the description here. Here, the defocus amount acquired has continuous values, and the defocus amount corresponding to a focus degree can be determined as "-11" for front focus, "0" for the in-focus state, and "+7" for rear focus. In addition, as in the first embodiment, data indicating a spatial (two-dimensional) defocus amount distribution in the imaging range may be created, and the control unit 1924 may be configured to acquire the defocus amount of the position decided by the decision unit 1922 in the defocus amount distribution (the distance information distribution).

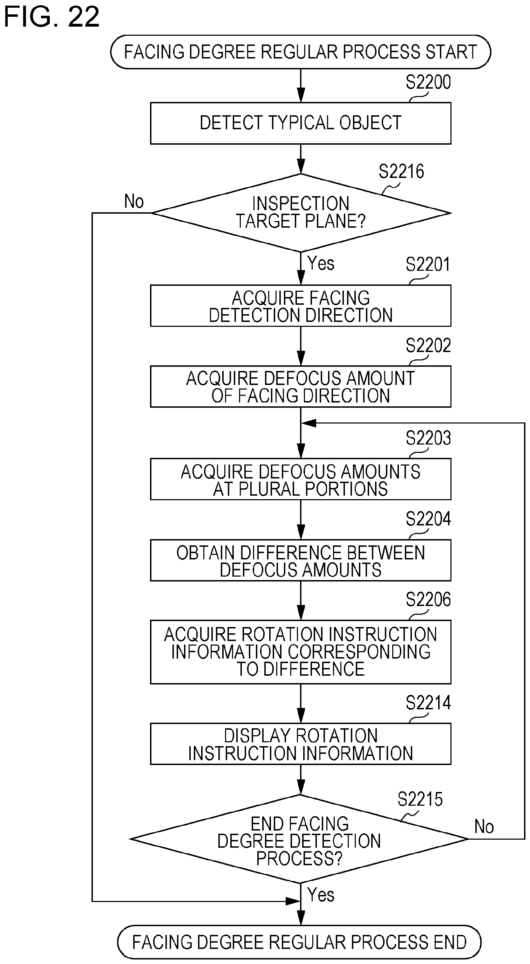

Next, operations of the imaging system according to this embodiment will be described with reference to the flowchart in Fig. 22. As described above, a user installs the imaging system toward an inspection target surface so as to image the inspection target surface by using the imaging system according to this embodiment. At this time, the user can install the camera apparatus 1900 in a direction that is assumed to be substantially in front of the inspection target region. However, if there is no reference point of a structure or an installation position and no precise measurement information of surroundings, the camera apparatus 1900 cannot be installed exactly in front of the inspection target region. In response to power-on of the camera apparatus 1900 after installing the camera apparatus 1900, a captured image that is captured by the imaging element 1904 is displayed by the display unit 1905 as a live-view image on a display screen on the back of the camera apparatus 1900. Subsequently, the process in accordance with the flowchart in Fig. 22 starts.

In step S2200, the subject recognizing unit 1928 performs a typical object detection process on the captured image. In this embodiment, since the inspection target surface of a structure to be imaged is included in objects to be detected as typical objects, information on a feature quantity indicating the inspection target surface is stored in the ROM 1902 in advance.

In step S2216, the subject recognizing unit 1928 determines whether an object detected in step S2200 is the inspection target surface of a structure to be imaged in the facing relationship with the camera apparatus 1900. If it is determined that the object is the inspection target surface, the process is continued and proceeds to step S2201. On the other hand, if it is determined that the object is not the inspection target surface, the process in accordance with the flowchart in Fig. 22 ends.

In step S2201, the decision unit 1922 acquires setting information indicating "driving of the camera apparatus 1900 for making the camera apparatus 1900 face the inspection target surface".

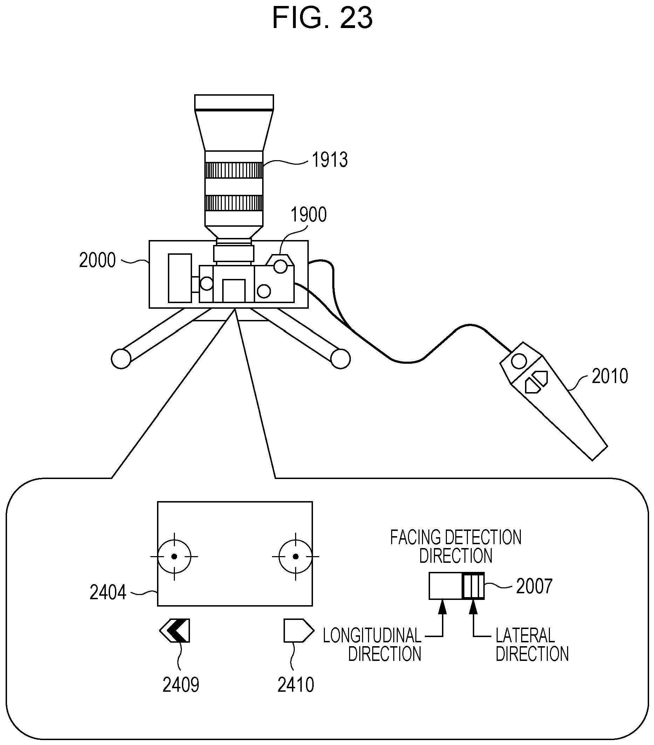

For example, as illustrated in Fig. 23, the operation unit 1906 controls "driving of the camera apparatus 1900 for making the camera apparatus 1900 face the inspection target surface" (facing detection direction). That is, the operation unit 1906 has a switch corresponding to the operation unit 2007 for setting the facing detection direction to at least any of "longitudinal direction", "lateral direction", and "translation". By operating this switch, the user can set the facing detection direction to any of the longitudinal direction (rotation axis = tilt axis) and the lateral direction (rotation axis = pan axis). The decision unit 1922 acquires the facing detection direction set by using the switch as setting information. As illustrated in Figs. 21A and 21B, if the user images a horizontally long structure while moving laterally, the facing detection direction of the lateral (rotation) direction is selected.

In addition, as described above, in a case of performing control including translation in the XYZ directions so as to obtain an image from the front and in which a plurality of regions are in focus (for example, by mode setting), the setting of the facing detection direction in step S2201 is not performed. The control unit 1924 estimates the position and orientation of a plane of a subject to be focused on the basis of the distance information distribution acquired in the plurality of regions in the captured image as in the first embodiment, and controls the position and orientation of the pan head apparatus 2000 (the camera apparatus 1900).

As an example of setting the facing detection direction to any of the longitudinal direction (rotation axis = tilt axis) and the lateral direction (rotation axis = pan axis), a case where the facing detection direction is set to the lateral direction will be described below.

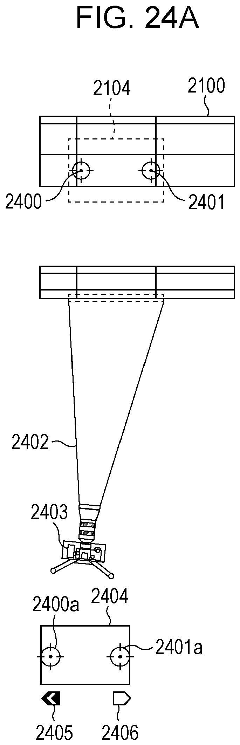

Subsequently, in step S2202, since the facing detection direction is the lateral direction, the decision unit 1922 sets each of two regions that are arranged in the left-right direction within the imaging range of the camera apparatus 1900 as the "region for acquiring the defocus amount". For example, as illustrated in Fig. 24A, the decision unit 1922 sets, as the "region for acquiring the defocus amount", a region 2400 near a left end and a region 2401 near a right end of the imaging region 2104 that falls within an imaging range 2402 of the camera apparatus 1900 in the social infrastructure 2100. In addition, this embodiment is not limited to this, and also in a case of setting the facing detection direction, as in the first embodiment, the defocus amount of the entire screen (entire image) may be acquired.

In step S2203, the control unit 1924 acquires the defocus amounts at the positions (the region 2400 and the region 2401 in the case of Fig. 24A) set in step S2202 as described above. At this time, the camera apparatus 1900 does not have to focus on the inspection target surface, and acquires the defocus amounts in the regions set in step S2202.

In step S2204, the acquisition unit 1923 acquires "the defocus amount in the left region" and "the defocus amount in the right region" acquired in step S2203. Subsequently, the difference calculating unit 1925 calculates a difference by subtracting "the defocus amount in the right region" from "the defocus amount in the left region".

In step S2206, the identification unit 1926 acquires "information indicating a rotation direction and a rotation degree of the camera apparatus 1900" corresponding to the difference between the defocus amounts calculated in step S2204, as rotation instruction information (notification information).

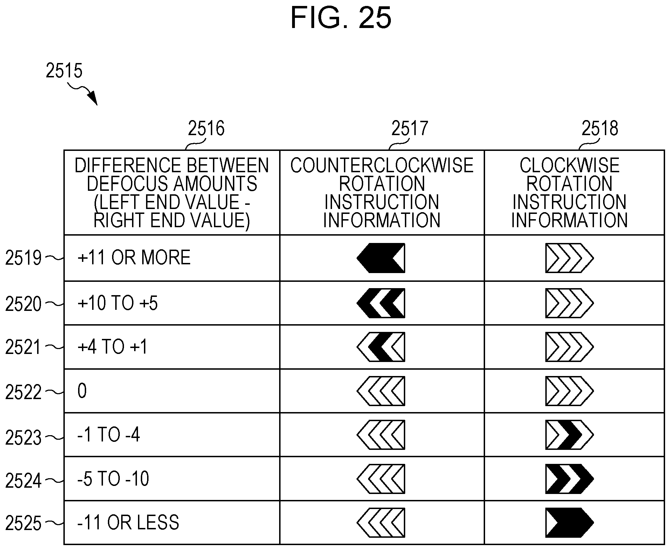

Here, as illustrated in Fig. 25, a table 2515 is registered in the ROM 1902. In the table 2515, rotation instruction information corresponding to the difference between the defocus amounts is registered. In a column 2516, ranges of the difference between the defocus amounts are registered. For example, a range of the difference between the defocus amounts "+11 or more" is registered in a row 2519 in the column 2516, and a range of the difference between the defocus amounts "-5 to -10" is registered in a row 2524 in the column 2516.

In a column 2517, icons in accordance with rotation amounts when the camera apparatus 1900 is to be rotated counterclockwise are registered. The icon registered in the row 2519 in the column 2517 indicates a rotation amount that is larger than a rotation amount indicated by the icon registered in a row 2520 in the column 2517. The icon registered in the row 2520 in the column 2517 indicates a rotation amount that is larger than a rotation amount indicated by the icon registered in a row 2521 in the column 2517. The icons registered in rows 2522 to 2525 in the column 2517 indicate that counterclockwise rotation is unnecessary.

In a column 2518, icons in accordance with rotation amounts when the camera apparatus 1900 is to be rotated clockwise are registered. The icon registered in the row 2525 in the column 2518 indicates a rotation amount that is larger than a rotation amount indicated by the icon registered in the row 2524 in the column 2518. The icon registered in the row 2524 in the column 2518 indicates a rotation amount that is larger than a rotation amount indicated by the icon registered in the row 2523 in the column 2518. The icons registered in the rows 2519 to 2522 in the column 2518 indicate that clockwise rotation is unnecessary.

Thus, for example, if the difference between the defocus amounts calculated in step S2204 is "+7", the identification unit 1926 acquires, as the rotation instruction information, the two icons registered in the row 2520 corresponding to the range "+10 to +5" including the difference "+7".

In addition, for example, if the difference between the defocus amounts calculated in step S2204 is "-12", the identification unit 1926 acquires, as the rotation instruction information, the two icons registered in the row 2525 corresponding to the range "-11 or less" including the difference "-12".

That is, in the table in Fig. 25, the rotation instruction information for notifying a rotation direction in accordance with the sign of the difference between the defocus amounts and a rotation degree in accordance with the absolute value of the difference between the defocus amounts is registered.

In step S2214, the output unit 1927 outputs the rotation instruction information acquired in step S2206 to the display unit 1905 as "notification information for notifying the user of the rotation direction and the rotation degree of the camera apparatus 1900". The display unit 1905 displays the notification information on a display screen on the back of the camera apparatus 1900. For example, as illustrated in Fig. 24A, on the lower left of a live-view image 2404 displayed on the display screen on the back of the camera apparatus 1900, an icon 2405 acquired from the column 2517 is displayed. In addition, on the lower right of the live-view image 2404, an icon 2406 acquired from the column 2518 is displayed. Note that display positions of the icon 2405 and the icon 2406 are not limited to specific display positions, and, for example, the icon 2405 and the icon 2406 may be displayed to be superimposed on the live-view image 2404. In addition, in Fig. 24A, icons 2400a and 2401a are displayed in a superimposed manner at positions corresponding to the position 2400 and the position 2401, respectively, on the live-view image 2404.

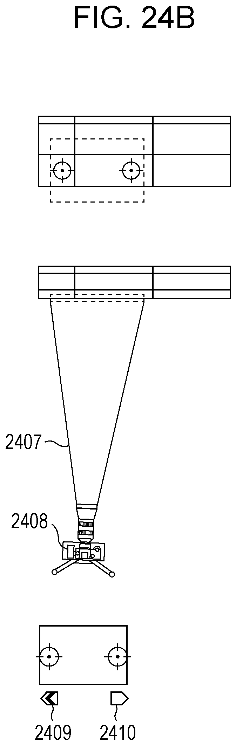

The user who sees the displayed icons 2405 and 2406 recognizes the notification for rotating the camera apparatus 1900 counterclockwise, and rotates the camera apparatus 1900 counterclockwise. Fig. 24B illustrates a state after the camera apparatus 1900 is rotated counterclockwise from the state in Fig. 24A.

Also in the state in Fig. 24B, since icons 2409 and 2410 are still displayed, the user similarly recognizes the notification for rotating the camera apparatus 1900 counterclockwise, and rotates the camera apparatus 1900 counterclockwise. Here, both the icon 2406 and the icon 2410 indicate that clockwise rotation is unnecessary.

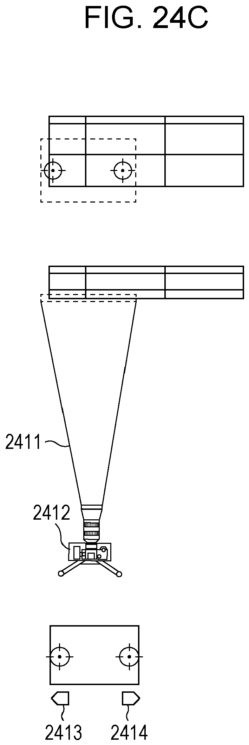

On the other hand, both the icon 2405 and the icon 2409 indicate that counterclockwise rotation is necessary, but the icon 2409 indicates rotation with a smaller rotation amount than the icon 2405. Fig. 24C illustrates a state after the camera apparatus 1900 is further rotated counterclockwise from the state in Fig. 24B.

In the state in Fig. 24C, an icon 2413 indicating that counterclockwise rotation is unnecessary and an icon 2414 indicating that clockwise rotation is unnecessary are displayed. The user who sees the displayed icons 2413 and 2414 recognizes the notification indicating that it is unnecessary to rotate the camera apparatus 1900 clockwise or counterclockwise, and does not rotate the camera apparatus 1900.

Fig. 23 illustrates a state where the camera apparatus 1900 is mounted on the pan head apparatus 2000, and the remote control apparatus 2010 for pan/tilt operation of the pan head apparatus 2000 and for imaging operation of the camera apparatus 1900 is connected. At this time, by being connected to the camera apparatus 1900 via the external I/F 1910 of the camera apparatus 1900, the remote control apparatus 2010 can perform imaging by using the camera apparatus 1900.

Referring back to Fig. 22, in step S2215, the CPU 1901 determines whether a condition for ending the process in accordance with the flowchart in Fig. 22 is satisfied. For example, when the user inputs an instruction for ending the process by operating the operation unit 1906 or powers off the camera apparatus 1900, the CPU 1901 determines that the condition for ending the process in accordance with the flowchart in Fig. 22 is satisfied.

As a result of such determination, if the condition for ending the process in accordance with the flowchart in Fig. 22 is satisfied, the process in accordance with the flowchart in Fig. 22 ends. If the ending condition is not satisfied, the process proceeds to step S2203.

In the above manner, by installing the pan head apparatus 2000, on which the camera apparatus 1900 is mounted as in Fig. 23, toward the inspection target surface, it is possible to notify the user of the rotation/translation instruction information for making the camera apparatus 1900 face the inspection target surface. In addition, the user who receives the notification operates the pan head apparatus 2000 or the like in accordance with the notification, and thus, the camera apparatus 1900 can exactly face the inspection target surface, and exact inspection of deformation becomes possible. At the same time, by making the camera apparatus 1900 exactly face the inspection target surface, when a region adjacent to the inspection target surface is to be imaged, by translating the camera apparatus 1900, the inspection target surface can be continuously imaged under uniform conditions. In addition, even when the imaging element 1904 or the lens apparatus 1913 of the camera apparatus 1900 is deviated from the design position due to a long-term change, since the camera apparatus 1900 exactly faces the inspection target surface, exact inspection of deformation becomes possible.

Although the rotation direction for making the camera apparatus 1900 face the inspection target surface is the lateral (rotation) direction and the pan axis of the pan head apparatus 2000 is operated in this embodiment, a rotation instruction may be issued for making the camera apparatus 1900 face the inspection target surface in the longitudinal (rotation) direction by switching the facing detection direction, and the tilt axis may be operated. Furthermore, detection in the lateral (rotation) direction and the longitudinal (rotation) direction may be performed at the same time, and the rotation instruction information in both directions may be presented.

In addition, although examples of the value of the defocus amount are presented, and the rotation instruction information is defined as three types in this embodiment, since the value of the defocus amount differs depending on the type of an image plane phase difference sensor to be used, a coefficient or the like may be multiplied as appropriate for use, and the type is not limited to these.

In addition, although an icon indicating both the rotation direction and the rotation degree is displayed in this embodiment, an icon indicating the rotation direction and an icon indicating the rotation degree may be separately displayed, or only either one of them may be displayed. In addition, information indicating the rotation direction or the rotation degree is not limited to an icon and may be, for example, text information. In addition, a method for notifying the rotation direction or the rotation degree is not limited to a specific notification method.

In addition, although an icon is displayed for a direction in which rotation is unnecessary in this embodiment, an icon is not necessarily displayed for a direction in which rotation is unnecessary. In addition, for a direction in which rotation is necessary, in addition to an icon, other information such as text information may further be displayed.

In addition, although the camera apparatus 1900 is mounted on the pan head apparatus 200 in this embodiment, as described above, the camera apparatus 1900 may also be mounted on a UAV (unmanned aerial vehicle) such as a drone apparatus. With such a configuration, an inspection target surface of a target structure in an environment where a pan head cannot be installed can be faced and imaged.

In addition, although rotation and/or translation instruction information is notified to the user in this embodiment, the rotation and/or translation instruction information may also be output to the pan head apparatus 2000. The pan head apparatus 2000 may be configured to control rotation of the camera apparatus 1900 in accordance with the rotation and/or translation instruction information and may automatically make the camera apparatus 1900 face the inspection target surface. With such a configuration, the user's operation load is reduced, increasing convenience.

In addition, although the camera apparatus 1900 calculates the defocus amount (the distance information distribution) in this embodiment, as in the first embodiment, a computer that is communicably connected via a communication circuit may be configured to calculate the defocus amount.

In addition, although the distance information distribution is calculated in order to control the position and orientation of the camera apparatus 1900 by operating the pan head apparatus 2000 in this embodiment, the usage of the calculated distance information distribution is not limited to this.

For example, the CPU 1901 records data of a pair of parallax images that are captured by the imaging element 1904 and imaging conditions including at least the F-number and the KX value in association with the image data on the memory card 1909 or the like. On the basis of the recorded data of the pair of images and imaging conditions, the CPU 1901 or a CPU of an external apparatus to which each piece of data is output generates and acquires a distance information distribution. Here, the distance information distribution to be acquired is a defocus amount distribution, and a blur map is generated by converting each defocus amount on the basis of the F-number (or the effective F-number) and the transform coefficient KX, which are the imaging conditions. The blur map may be used for quality evaluation regarding blurring in the captured images. In particular, in imaging for social infrastructure inspection, when deformation or the like on an inspection target surface is to be inspected, it is not possible to correctly perform crack detection, crack width measurement, and the like unless an evaluation is made by using an image in which the inspection target surface is not blurred. Thus, by referring to the defocus amount distribution (or the blur map), for example, by measurement performed only for a region (imaging range) in which blurring does not occur, more accurate inspection can be performed. In addition, for example, if it is determined that blurring with a blurring amount that is larger than or equal to a reference occurs in a captured image at a predetermined ratio or more, the CPU 1901 may notify the user that the captured image is unavailable (deformation detection is not possible). As a notification method, an image or an icon may be displayed on the display unit 1905, or light, sound, vibration, or the like from another device may be used for notification. In addition, the CPU 1901 may generate the above-described blur map, may generate an image in which each blurring amount is simply visualized, and may display the image on the display unit. By referring to the blur map, the user may manually or automatically capture an image again or move the camera apparatus 1900, for example.

The present invention is not limited to the above embodiments, and various changes and modifications can be made without departing from the spirit and scope of the present invention. Therefore, the following claims are accompanied to publicize the scope of the present invention.

[Other Embodiments]

The object of the present invention can also be achieved as follows. More specifically, a storage medium that stores a program code of software in which a procedure for implementing functions of the above-described embodiments is described is provided to a system or an apparatus. Then, the program code stored in the storage medium is read and executed by a computer (or CPU, MPU, or the like) of the system or the apparatus.

In this case, the program code itself read from the storage medium implements novel functions of the present invention. The storage medium storing the program code and the program constitute the present invention.

As the storage medium for providing the program code, for example, a flexible disk, a hard disk, an optical disk, a magneto-optical disk, and the like can be given. Also, a CD-ROM, a CD-R, a CD-RW, a DVD-ROM, a DVD-RAM, a DVD-RW, a DVD-R, a magnetic tape, a non-volatile memory card, a ROM, or the like may be used.

In addition, the functions of the above-described embodiments are implemented by making the program code read by a computer executable. Furthermore, a case where an OS (operating system) or the like working on a computer performs a part or all of actual processes in accordance with instructions of the program code and implements the functions of the above-described embodiments by the processes is also included.

Furthermore, the following cases are also included. First, a program code read from a storage medium is written into a memory equipped in a function expansion board inserted in a computer or a function expansion unit connected to a computer. Then, a CPU or the like included in the function expansion board or the function expansion unit performs a part or all of actual processes in accordance with instructions of the program code.

This application claims the benefit of Japanese Patent Application No. 2019-140818 filed July 31, 2019 and No. 2020-124031 filed July 20, 2020, which are hereby incorporated by reference herein in their entirety.

**Claims**

1. An image processing apparatus comprising:

   input means for inputting a distance information distribution calculated from an image captured by using an optical system that forms a field image on an imaging element of imaging means; estimation means for estimating a depth direction in the image from an imaging condition of the imaging means; and decision means for deciding, from a relationship between the distance information distribution and the estimated depth direction, an evaluation value indicating a deviation degree of the optical system and the imaging element from design positions.

2. An image processing apparatus comprising:

   input means for inputting a distance information distribution calculated from an image captured by using an optical system that forms a field image on an imaging element of imaging means; estimation means for estimating a depth direction in the image from an imaging condition of the imaging means; and decision means for deciding, from a relationship between the distance information distribution and the estimated depth direction, an evaluation value indicating a deviation degree in a depth direction of a subject in the image.

3. An image processing apparatus comprising:

   first acquisition means for acquiring an imaging condition regarding an image captured by imaging means, including at least an F-number and a transform coefficient that transforms an image shift amount into a defocus amount; second acquisition means for acquiring a distance information distribution that is a distribution of distance information corresponding to each region of the image captured by the imaging means; and image processing means for normalizing the distance information distribution on the basis of the F-number and the transform coefficient.

4. The image processing apparatus according to any one of claims 1 to 3, wherein the distance information distribution is information related to a distribution obtained by normalizing a distribution of a defocus amount of a subject by an F-number and an acceptable circle of confusion.

5. The image processing apparatus according to any one of claims 1 to 3, wherein the distance information distribution is any of information related to a distribution of a parallax amount of a subject, information related to a distribution of a defocus amount of the subject, information related to a distribution obtained by normalizing the distribution of the defocus amount of the subject by an F-number and an acceptable circle of confusion, or information related to a distribution of an actual distance from an imaging position to the subject.

6. The image processing apparatus according to any one of claims 1 to 5, wherein the information related to the distribution of the parallax amount of the subject is obtained from a pair of images with a parallax therebetween.

7. The image processing apparatus according to any one of claims 1 to 6, wherein the imaging condition is at least one of orientation information of the apparatus when the image is captured, a vanishing point in the image, a change in a density of texture in the image, or a determination result as to whether a structure with a known shape is included in the image.

8. The image processing apparatus according to any one of claims 1 to 7, wherein the relationship of the depth direction is an angle formed by a straight line on which the defocus amount is zero in the distance information distribution and a straight line indicating in-focus regions calculated by the means for estimating the depth direction.

9. The image processing apparatus according to any one of claims 1 to 8, wherein the relationship of the depth direction is a difference between a vector of an inclination of the defocus amount in the distance information distribution and a vector toward the vanishing point in the image calculated by the means for estimating the depth direction or a vector of a change direction of a density of texture in the image.

10. The image processing apparatus according to claim 2 or 3, wherein the deviation degree in the depth direction of the subject in the image is a difference between defocus amounts at a plurality of positions in the distance information distribution

11. The image processing apparatus according to any one of claims 1 to 9, comprising notification means for notifying the evaluation value.

12. The image processing apparatus according to any one of claims 1 to 11, wherein, when an input image is determined to include a typical object including a ground, a water surface, and a structure constructed in a perpendicular direction of the ground or water surface, the decision means decides the evaluation value indicating the deviation degree.

13. The image processing apparatus according to claim 12, wherein a statistic of the distance information distribution is a histogram of the distance information distribution.

14. The image processing apparatus according to any one of claims 1 to 13, wherein correction is made such that the deviation degree decreases by controlling an IS mechanism, performing image processing on the image, or rotating the image processing apparatus, in accordance with the evaluation value indicating the deviation degree.

15. The image processing apparatus according to any one of claims 1 to 14, wherein, by associating the evaluation value indicating the deviation degree with information on the imaging element and the optical system that have acquired the image for which the evaluation value has been calculated, the information is output to an external apparatus.

16. An image processing method comprising:

   an input step of inputting a distance information distribution calculated from an image captured by using an optical system that forms a field image on an imaging element of imaging means;
   an estimation step of estimating a depth direction in the image from an imaging condition of the imaging means; and
   a decision step of deciding, from a relationship between the distance information distribution and the estimated depth direction, an evaluation value indicating a deviation degree of the optical system and the imaging element from design positions.

17. An image processing method comprising:

   an input step of inputting a distance information distribution calculated from an image captured by using an optical system that forms a field image on an imaging element of imaging means;
   an estimation step of estimating a depth direction in the image from an imaging condition of the imaging means; and
   a decision step of deciding, from a relationship between the distance information distribution and the estimated depth direction, an evaluation value indicating a deviation degree in a depth direction of a subject in the image.

18. An image processing method comprising:

   a first acquisition step of acquiring an imaging condition regarding an image captured by imaging means, including at least an F-number and a transform coefficient that transforms an image shift amount into a defocus amount;
   a second acquisition step of acquiring a distance information distribution that is a distribution of distance information corresponding to each region of the image captured by the imaging means; and
   an image processing step of normalizing the distance information distribution on the basis of the F-number and the transform coefficient.

19. A computer-executable program on which a procedure for implementing functions of the means for controlling the image processing apparatus according to any one of claims 1 to 15 is described.

20. A computer-readable storage medium having stored a program for causing a computer to execute functions of the means of the image processing apparatus according to any one of claims 1 to 15.

FIG. 1

## FIG. 2

OPTICAL SYSTEM — 204

IMAGING UNIT — 205

A/D CONVERSION UNIT — 206

IMAGE PROCESSING UNIT — 207

RECORDING MEDIUM — 208

COMMUNICATION UNIT — 209

DISPLAY UNIT — 210

SYSTEM CONTROL UNIT — 201

ROM — 202

RAM — 203

OPERATION UNIT — 211

DETECTION UNIT — 212

DIGITAL CAMERA — 101

EP 4 007 265 A1

# FIG. 3

304 COMMUNICATION UNIT

305 RECORDING APPARATUS

306 IMAGE PROCESSING UNIT

307 DISPLAY UNIT

301 SYSTEM CONTROL UNIT

302 ROM

303 RAM

308 OPERATION UNIT

COMPUTER

102

# FIG. 4A

400

y
z
x

# FIG. 4B

400

401

403B    402A

S       S

# FIG. 5A

```
            ( START )
                |
                v
    ┌───────────────────────────┐ S500
    │   DETECT STATE OF CAMERA   │
    └───────────────────────────┘
                |
                v
    ┌───────────────────────────┐ S501
    │          ACQUIRE          │
    │      PARALLAX IMAGES      │
    └───────────────────────────┘
                |
                v
    ┌───────────────────────────┐ S502
    │     GENERATE DISTANCE     │
    │  DISTRIBUTION INFORMATION │
    └───────────────────────────┘
                |
                v
    ┌───────────────────────────┐ S503
    │       TRANSMIT DATA       │
    └───────────────────────────┘
                |
                v
             (  END  )
```

# FIG. 5B

START

S504

RECEIVE DATA

S505

ESTIMATE DEPTH
DIRECTION

S506

GENERATE EVALUATION
VALUE OF DEVIATION DEGREE
FROM DESIGN VALUES

S507

EVALUATION VALUE > Th ──No──

Yes

S508

TRANSMIT INFORMATION
OF CAMERA IN WHICH
DEVIATION IS DETECTED

END

# FIG. 5C

```
        ┌─────────┐
        │  START  │
        └─────────┘
             │
             ▼
                           S509
          ╱╲
         ╱  ╲
        ╱ RECEIVE ╲          No
       ╱ INFORMATION? ╲ ──────────────┐
        ╲            ╱                 │
         ╲          ╱                  │
          ╲_____╱                   │
             │                         │
            Yes          S510          │
             ▼                         │
    ┌──────────────────┐              │
    │ DISPLAY MESSAGE  │              │
    │    FOR USER      │              │
    └──────────────────┘              │
             │                         │
             ▼◄────────────────────────┘
        ┌─────────┐
        │   END   │
        └─────────┘
```

# FIG. 6

# FIG. 7

# FIG. 8

306

IMAGE PROCESSING UNIT

802

801

DEVIATION
DEGREE
CALCULATING
UNIT

805

800

803

DEPTH
DIRECTION
ESTIMATING
UNIT

804

# FIG. 9

DIGITAL CAMERA 101

900

902
903
901

OPTICAL SYSTEM 204
IMAGING UNIT 205

904

y
z
x

# FIG. 10

# FIG. 11A

1100

OPTICAL SYSTEM 204

IMAGING UNIT 205

x
y
z

# FIG. 11B

1101

204 OPTICAL SYSTEM

205 IMAGING UNIT

θ

# FIG. 12

# FIG. 13

# FIG. 14

101 DIGITAL CAMERA

IN THIS
CAMERA **** AND
LENS ****
THAT YOU USE, CHANGES
FROM DESIGN POSITIONS
ARE DETECTED.
PLEASE ASK CUSTOMER
CENTER FOR MORE DETAILS.
CONTACT: ***-***-****

210 DISPLAY UNIT

# FIG. 15

1500

600

1501

# FIG. 16

FREQUENCY

DEFOCUS AMOUNT

FIG. 17A

FIG. 17B

FIG. 17C

# FIG. 18

# FIG. 19A

EP 4 007 265 A1

# FIG. 19B

1900 ~ 

CAMERA APPARATUS

1922
DECISION UNIT

1923
ACQUISITION UNIT

1924
CONTROL UNIT

1925
DIFFERENCE CALCULATING UNIT

1926
IDENTIFICATION UNIT

1927
OUTPUT UNIT

1928
SUBJECT RECOGNIZING UNIT

# FIG. 20

2010

REMOTE CONTROL
APPARATUS

2000 — PAN HEAD APPARATUS

| 2001 | 2002 | 2003 | 2004 |
|------|------|------|------|
| CPU | ROM | RAM | EXTERNAL I/F |

2009

| POWER UNIT | DISPLAY UNIT | OPERATION UNIT | DRIVING UNIT |
|------------|--------------|----------------|--------------|
| 2005 | 2006 | 2007 | 2008 |

EP 4 007 265 A1

# FIG. 21A

# FIG. 21B

EP 4 007 265 A1

## FIG. 22

```
   ( FACING DEGREE REGULAR PROCESS START )
                      │
                      ▼                    S2200
        ┌──────────────────────────────┐
        │      DETECT TYPICAL OBJECT    │
        └──────────────────────────────┘
                      │
                      ▼                    S2216
              ╱─────────────────╲
        No   ╱    INSPECTION      ╲
    ◄───────    TARGET PLANE?       ───
              ╲                   ╱
               ╲─────────────────╱
                      │ Yes
                      ▼                    S2201
        ┌──────────────────────────────┐
        │      ACQUIRE FACING           │
        │    DETECTION DIRECTION        │
        └──────────────────────────────┘
                      │
                      ▼                    S2202
        ┌──────────────────────────────┐
        │   ACQUIRE DEFOCUS AMOUNT      │
        │     OF FACING DIRECTION       │
        └──────────────────────────────┘
                      │
                      ▼                    S2203
        ┌──────────────────────────────┐
        │   ACQUIRE DEFOCUS AMOUNTS     │
        │       AT PLURAL PORTIONS      │
        └──────────────────────────────┘
                      │
                      ▼                    S2204
        ┌──────────────────────────────┐
        │   OBTAIN DIFFERENCE BETWEEN   │
        │       DEFOCUS AMOUNTS         │
        └──────────────────────────────┘
                      │
                      ▼                    S2206
        ┌──────────────────────────────┐
        │ ACQUIRE ROTATION INSTRUCTION  │
        │ INFORMATION CORRESPONDING     │
        │         TO DIFFERENCE         │
        └──────────────────────────────┘
                      │
                      ▼                    S2214
        ┌──────────────────────────────┐
        │      DISPLAY ROTATION         │
        │  INSTRUCTION INFORMATION      │
        └──────────────────────────────┘
                      │
                      ▼                    S2215
              ╱─────────────────╲
             ╱    END FACING      ╲   No
            ─   DEGREE DETECTION    ────►
             ╲     PROCESS?        ╱
              ╲─────────────────╱
                      │ Yes
                      ▼
   ( FACING DEGREE REGULAR PROCESS END )
```

# FIG. 23

1913

1900

2000

2010

FACING DETECTION
DIRECTION

2404

2409    2410

2007

LONGITUDINAL
DIRECTION

LATERAL
DIRECTION

# FIG. 24A

# FIG. 24B

2407

2408

2409    2410

# FIG. 24C

2411

2412

2413    2414

# FIG. 25

2515

| DIFFERENCE BETWEEN DEFOCUS AMOUNTS (LEFT END VALUE - RIGHT END VALUE) 2516 | COUNTERCLOCKWISE ROTATION INSTRUCTION INFORMATION 2517 | CLOCKWISE ROTATION INSTRUCTION INFORMATION 2518 |
|---|---|---|
| +11 OR MORE | ◀ | ⟫⟫⟫ |
| +10 TO +5 | ◀◀ | ⟫⟫⟫ |
| +4 TO +1 | ◁◀◀ | ⟫⟫⟫ |
| 0 | ◁◁◁ | ⟫⟫⟫ |
| -1 TO -4 | ◁◁◁ | ▶▶ |
| -5 TO -10 | ◁◁◁ | ▶▶ |
| -11 OR LESS | ◁◁◁ | ▶ |

**INTERNATIONAL SEARCH REPORT**

| International application No. |
| --- |
| PCT/JP2020/028776 |

### A. CLASSIFICATION OF SUBJECT MATTER

H04N 5/232(2006.01)i; G02B 7/28(2006.01)i; G02B 7/34(2006.01)i; G03B 15/00(2006.01)i; G03B 17/18(2006.01)i; G03B 35/00(2006.01)i; G06T 7/593(2017.01)i
FI:     H04N5/232; G06T7/593; H04N5/232 941; G03B15/00 B; G03B17/18 Z; G03B35/00 Z; G02B7/28 Z; G02B7/34; H04N5/232 290

According to International Patent Classification (IPC) or to both national classification and IPC

### B. FIELDS SEARCHED

Minimum documentation searched (classification system followed by classification symbols)
H04N5/232; G02B7/28; G02B7/34; G03B15/00; G03B17/18; G03B35/00; G06T7/593

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-78582 A (SONY CORP.) 23.05.2019 (2019-05-23) paragraphs [0013]-[0114], fig. 1-11 | 1-20 |
| A | US 2015/0138383 A1 (INTERNATIONAL BUSINESS MACHINES CORPORATION) 21.05.2015 (2015-05-21) paragraphs [0019]-[0089], fig. 1-5 | 1-20 |

☐ Further documents are listed in the continuation of Box C.   ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 September 2020 (28.09.2020) | 06 October 2020 (06.10.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/028776

| Patent Documents referred in the Report | Publication Date | Patent Family | Publication Date |
|---|---|---|---|
| JP 2019-78582 A | 23 May 2019 | WO 2019/082460 A1 paragraphs [0013]-[0114], fig. 1-11 | |
| US 2015/0138383 A1 | 21 May 2015 | (Family: none) | |

Form PCT/ISA/210 (patent family annex) (January 2015)

**EP 4 007 265 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004306249 A
- JP 2008015754 A
- JP 2019140818 A
- JP 2020124031 A

### Non-patent literature cited in the description

- **KANG Y ; HASEGAWA O ; NAGAHASHI H.** Texture Structure Classification and Depth Estimation using Multi-Scale Local Autocorrelation Features. Tokyo Inst. Technol,